(19) Europäisches Patentamt
European Patent Office
Office européen des brevets

(11) EP 4 592 343 A1

(12) **EUROPEAN PATENT APPLICATION**
published in accordance with Art. 153(4) EPC

(43) Date of publication:
**30.07.2025 Bulletin 2025/31**

(21) Application number: **23868469.0**

(22) Date of filing: **07.09.2023**

(51) International Patent Classification (IPC):
***C08L 23/08*** *(2025.01)* ***C08J 5/18*** *(2006.01)*
***B29C 55/12*** *(2006.01)* ***C08F 210/16*** *(2006.01)*
***C08F 210/14*** *(2006.01)*

(52) Cooperative Patent Classification (CPC):
**B29C 55/12; C08F 210/14; C08F 210/16; C08J 5/18; C08L 23/08**

(86) International application number:
**PCT/KR2023/013457**

(87) International publication number:
**WO 2024/063415 (28.03.2024 Gazette 2024/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.09.2022 KR 20220120055**
**02.11.2022 KR 20220144767**

(71) Applicant: **LG Chem, Ltd.**
**Yeongdeungpo-gu**
**Seoul 07336 (KR)**

(72) Inventors:
- **LEE, Sanghwa**
**Daejeon 34122 (KR)**
- **YOU, Youngsuk**
**Daejeon 34122 (KR)**
- **LEE, Naeun**
**Daejeon 34122 (KR)**
- **KIM, Taejin**
**Daejeon 34122 (KR)**
- **KIM, Inkyo**
**Daejeon 34122 (KR)**
- **PARK, Cheol Hun**
**Daejeon 34122 (KR)**
- **CHOI, Eun Yeob**
**Daejeon 34122 (KR)**

(74) Representative: **Hoffmann Eitle**
**Patent- und Rechtsanwälte PartmbB**
**Arabellastraße 30**
**81925 München (DE)**

(54) **POLYETHYLENE COMPOSITION AND BIAXIALLY STRETCHED FILM COMPRISING SAME**

(57) The present disclosure relates to a polyethylene composition suitable for a biaxially stretched film by having excellent stretching stability and high shrinkage resistance while maintaining excellent mechanical properties, and a biaxially stretched film including the same.

【FIG. 1】

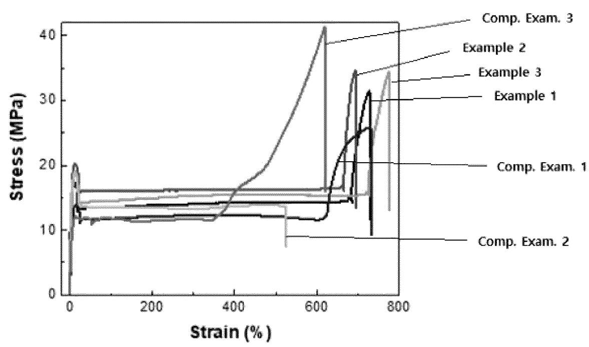


EP 4 592 343 A1

Processed by Luminess, 75001 PARIS (FR)

## Description

[TECHNICAL FIELD]

CROSS-REFERENCE TO RELATED APPLICATION(S)

This application claims the benefit of Korean Patent Applications No. 10-2022-0120055 filed on September 22, 2022, and No. 10-2022-0144767 filed on November 2, 2022 with the Korean Intellectual Property Office, the disclosures of which are incorporated herein by reference in their entirety.

The present disclosure relates to a polyethylene composition suitable for a biaxially stretched film by having excellent stretching stability and high shrinkage resistance while maintaining excellent mechanical properties, and a biaxially stretched film including the same.

[BACKGROUND OF ART]

Thin film products made of linear low density polyethylene (LLDPE) and/or high density polyethylene (HDPE) are widely used in packaging such as merchandise bags, grocery bags, food and specialty packaging, and industrial liners. In these applications, a shrink film capable of packaging the product while maintaining its shape is mainly used to protect the product from being touched during display.

In particular, among these shrink films, biaxially stretched polymer films have excellent mechanical properties, productivity, and printability, and thus are widely used in packaging. Commercially available packaging films generally use BOPP (bi-axially oriented polypropylene), BOPET (biaxially-oriented polyethylene terephthalate) or BOPA (biaxially-oriented polyamide) for a printing layer, and use LLDPE for a sealing layer. These composite materials cannot be recycled, and the demand for a single material is increasing due to regulations on recycling of packaging materials. Therefore, research and development are being conducted to manufacture a single-material packaging film by replacing the film of the printing layer with a biaxially-oriented polyethylene (BOPE) film.

However, commercially available polyethylene (PE) resins do not have sufficient stretching stability, and phenomena such as breakage and melting occur during stretching, making it difficult to apply them to the biaxial stretching process. In order to secure stretching stability, a product in the form of a polyethylene composition containing a resin having a low density and a high melting index has been developed. However, the composition as described above is unsuitable as a PE resin for biaxially stretched film due to low stiffness, shrinkage, and impact resistance.

Therefore, there is a need for a method of selecting a PE resin having a molecular structure favorable to stretching and selecting an appropriate composition, thereby providing a PE composition for biaxial stretching that exhibits stretching stability during biaxial stretching and has good film mechanical properties.

[DETAILED DESCRIPTION OF THE INVENTION]

[Technical Problem]

The present disclosure relates to a polyethylene composition capable of preparing a biaxially stretched film having high shrinkage resistance, stretching stability and transparency while maintaining excellent mechanical properties, and a biaxially stretched film including the same.

[Technical Solution]

In one embodiment of the present disclosure, there is provided a polyethylene composition including at least one ethylene-alpha olefin copolymer,

> wherein a tie molecule fraction derived from crystallinity and crystal structure analysis results is 4.5 to 7.0 wt%,
> a natural draw ratio (NDR) is 600% or more, as measured by performing a tensile test on a sheet-type specimen with a thickness of 1 mm at a tensile rate of 500%/min according to ASTM D638.

In another embodiment of the present disclosure, there is provided a biaxially stretched film including the polyethylene composition of the above embodiment.

Hereinafter, the polyethylene composition and the biaxially stretched film according to embodiments of the present invention will be described in detail.

The terminology used herein is for the purpose of describing particular embodiments only and is not intended to be limiting of the invention.

The singular forms are intended to include the plural forms as well, unless the context clearly indicates otherwise.
In this disclosure, the terminology "include" , "comprise" , or "have" is used to describe stated features, numbers, steps, components, or combination thereof, and do not preclude the addition of one or more other features, numbers, steps, components, or combinations thereof.
The terminology "about" or "substantially" is intended to have meanings close to numerical values or ranges specified with an allowable error and intended to prevent accurate or absolute numerical values disclosed for understanding of the present invention from being illegally or unfairly used by any unconscionable third party.
Further, in the present disclosure, the (co)polymer is meant to include both a homo-polymer and a co-polymer.
Unless otherwise defined herein, "copolymerization" may mean block copolymerization, random copolymerization, graft copolymerization or alternating copolymerization, and "copolymer" means block copolymer, random copolymer, graft copolymer or alternating copolymer.
As the present invention can be variously modified and have various forms, specific embodiments thereof are shown by way of examples and will be described in detail. However, it is not intended to limit the present invention to the particular form disclosed and it should be understood that the present invention includes all modifications, equivalents, and replacements within the idea and technical scope of the present invention.

**(Polyethylene composition)**

In one embodiment of the present disclosure, there is provided a polyethylene composition including at least one ethylene-alpha olefin copolymer,

> wherein a tie molecule fraction derived from crystallinity and crystal structure analysis results is 4.5 to 7.0 wt%, and a natural draw ratio (NDR) is 600% or more, as measured by performing a tensile test on a sheet-type specimen with a thickness of 1 mm at a tensile rate of 500%/min according to ASTM D638.

For reference, "part by weight" as used herein refers to a relative concept of a ratio of the weight of the remaining material based on the weight of a specific material. For example, in a mixture containing 50 g of material A, 20 g of material B, and 30 g of material C, the amounts of material B and C based on 100 parts by weight of material A are 40 parts by weight and 60 parts by weight, respectively.
Meanwhile, "wt% (% by weight)" refers to an absolute concept of expressing the weight of a specific material in percentage based on the total weight. In the above-described mixture, the contents of material A, B and C based on 100% of the total weight of the mixture are 50 wt %, 20 wt % and 30 wt %, respectively.
In the polyethylene composition the embodiment, the first ethylene-alpha olefin copolymer, which has excellent flowability to impart stretchability by applying specific metallocene catalysts, which will be described later, respectively, is blended with the second ethylene-alpha olefin copolymer, which has excellent mechanical properties, thereby adjusting the balance between mechanical properties and elongation. Accordingly, it has characteristics suitable for manufacturing a biaxially stretched film having high shrinkage resistance, printability, and transparency while maintaining mechanical properties, productivity, and stretching stability equal to or superior to those of the conventional ones.
This polyethylene composition may include, for example, (a) a first ethylene-alpha olefin copolymer having a density of 0.930 g/cm$^3$ to 0.960 g/cm$^3$ and a melt index ($MI_{2.16}$, 190 °C, 2.16 kg load) of 0.2 g/10min to 2.0 g/10min; and (b) a second ethylene-alpha olefin copolymer having a density of 0.870 g/cm$^3$ to 0.920 g/cm$^3$ and a melt index ($MI_{2.16}$, 190 °C, 2.16 kg load) of 3.0 g/10min to 10.0 g/10min, wherein each is manufactured by using a metallocene catalyst.
In particular, the polyethylene composition of one embodiment may have desirable crystal characteristics, crystal structure, and tie molecule fraction as it includes the first and second ethylene-alpha olefin copolymers in a predetermined composition. More specifically, the polyethylene composition of one embodiment may exhibit partial crystallinity including crystalline regions containing a lamellar structure and amorphous regions between the crystalline regions. The tie molecules may be included in the amorphous regions to connect the lamellae, and the tie molecule fraction may affect elasticity of the polyethylene composition.
The polyethylene composition of one embodiment can exhibit excellent stretching properties and stretching stability by having an appropriate tie molecule fraction. In addition, the content of the crystalline regions is also optimized to provide excellent mechanical properties, and transparency, when manufactured into a biaxially stretched film.
In a more specific embodiment, the polyethylene composition may have a tie molecule fraction derived from crystallinity and crystal structure analysis results of 4.5 to 7.0 wt%, 4.9 to 6.5 wt%, or 5.0 to 6.0 wt%. When the tie molecule fraction is too small, stretchability and stretching stability of the composition may decrease, making it difficult to manufacture a biaxially stretched film with excellent mechanical properties. When the tie molecule fraction is excessively high, strain hardening may easily occur during the stretching process of the composition, making stretching itself difficult.
The tie molecule fraction can be calculated from the following Equations 1 to 4 using the molecular weight, melting point, and crystallinity (DSC) analysis results of the composition of the embodiment, and the method for calculating

the tie molecule fraction is also described in U.S. Patent No. 10775287:

[Equation 1]

$$\overline{P} = \frac{\int_0^\infty nPdM}{\int_0^\infty ndM}$$

In Equation 1, n is dw/dM (wherein M refers to a molecular weight of ethylene (co)polymer), P can be calculated from the following Equation 2, and dM is dlogM<x-axis data of GPC curve, X n+1> - dlogM<x-axis data of GPC curve, Xn>.

[Equation 2]

$$P = \frac{1}{3}\frac{\int_{2l_c+l_a}^\infty r^2 \exp\left(-b^2r^2\right)dr}{\int_0^\infty r^2 \exp\left(-b^2r^2\right)dr}$$

in Equation 2, r is an end-to-end distance of a random coil, $b^2$ is $3/2\langle r\rangle^2$, and $I_c$ is a crystal thickness of the following Equation 3;

[Equation 3]

$$T_m = T_m^o\left(1 - \frac{2\sigma_e}{\Delta h_m l}\right)$$

in Equation 3, Tm is the melting temperature of ethylene (co)polymer, $T_m^0$ is 415K, $\sigma_e$ is $60.9\times10^{-3}Jm^{-2}$, $\Delta h_m$ is $2.88\times10^{3}Jm^{-3}$, $I_a$ is an amorphous layer thickness of the following Equation 4, and <r> can be calculated as 2×Ic+la;

[Equation 4]

$$l_a = \rho_c l_c(1-\omega^c)/\rho_a\omega^c$$

in Equation 4, $\rho_c$ is a density of a crystalline phase and is 1000 $kg/m^3$, $\rho_a$ is a density of an amorphous phase and is 852 $kg/m^3$, and $\omega^c$ is a weight fraction crystallinity.

In addition, the composition of one embodiment may have a natural draw ratio (NDR) of 600% or more, 600 to 1000%, or 650 to 900% by including the first and second ethylene-alpha olefin copolymers in an optimal composition, wherein the natural draw ratio is defined as the elongation up to the strain hardening point of tensile curve when the composition is processed into a sheet-type specimen with a thickness of 1 mm, and subjected to a tensile test at a tensile rate of 500%/min at room temperature (about 25 °C) according to ASTM D638.

In addition, the composition of one embodiment may have an elongation at break of 3000% or more, 3000 to 4500%, or 3100 to 4000%, wherein the elongation at break is defined as the elongation at break of the specimen when the composition was processed into a sheet-type specimen with a thickness of 1 mm and subjected to a tensile test at a tensile rate of 1000%/min at about 120 °C according to ASTM D638.

In addition, the composition of one embodiment may have a yield strength at 120 °C of 4.0 MPa or more, 4.0 to 6.0 MPa, or 4.5 to 5.0 MPa, and a 1% modulus of 4.0 MPa or more, 4.0 to 6.0 MPa, or 4.2 to 5.0 MPa, when calculated from

high-temperature tensile test results by performing a tensile test at a tensile rate of 1000%/min at about 120 °C in accordance with ASTM D638.

These natural draw ratio and elongation at break define the excellent elasticity, stretchability and stretching stability of the composition of one embodiment, and the composition of one embodiment satisfying these physical properties enables the production of a biaxially stretched film with excellent mechanical properties.

Meanwhile, the polyethylene composition may have a density of 0.925 g/cm$^3$ or more and 0.939 g/cm$^3$ or less. Preferably, the density may be 0.927 g/cm$^3$ or more, 0.929 g/cm$^3$ or more, or 0.931 g/cm$^3$ or more, and 0.938 g/cm$^3$ or less, 0.937 g/cm$^3$ or less, 0.936 g/cm$^3$ or less, or 0.935 g/cm$^3$ or less.

The density (g/cm$^3$) can be measured using a density gradient column according to ASTM D 1505 (American Society for Testing and Materials). As an example, a method for measuring the density (g/cm$^3$) is as described in Test Examples 1 and 2 to be described later.

In addition, the polyethylene composition may have a melt index ($MI_{2.16}$, 190 °C, 2.16 kg load) of 0.3 g/10min to 1.5 g/10min. Preferably, the melt index ($MI_{2.16}$, 190 °C, 2.16 kg load) may be 0.35 g/10min or more, 0.37 g/10min or more, or 0.4 g/10min or more, and 1.4 g/10min or less, 1.3 g/10min or less, 1.2 g/10min or less, or 1.1 g/10min or less.

The melt index ($MI_{2.16}$) can be measured at 190 °C under a load of 2.16 kg according to ASTM D 1238 (condition E, 190 °C, 2.16 kg) of the American Society for Testing and Materials. For example, a method for measuring the melt index ($MI_{2.16}$) is as described in Test Examples 1 and 2 to be described later.

In addition, the polyethylene composition may have a number average molecular weight (Mn) of 15,000 g/mol or more, 17,000 g/mol or more, or 19,000 g/mol or more to 500,000 g/mol or less, 300,000 g/mol or less, 100,000 g/mol or less, 50,000 g/mol or less, or 31,000 g/mol or less. The polyethylene composition may have a weight average molecular weight (Mw) of 100,000 g/mol or more, or 106,000 g/mol or more to 1,000,000 g/mol or less, 500,000 g/mol or less, 300,000 g/mol or less, or 158,000 g/mol or less.

A molecular weight distribution (Mw/Mn) of the polyethylene composition may be 10.0 or less, or 1.0 or more to 10.0 or less. More preferably, the molecular weight distribution (Mw/Mn) may be 9.5 or less, 9.0 or less, 8.5 or less, or 8.3 or less. Further, the molecular weight distribution (Mw/Mn) may be 1.5 or more, 1.8 or more, 2.0 or more, 2.5 or more, 2.8 or more, 3.0 or more, or 3.4 or more.

In the present disclosure, the weight average molecular weight (Mw) and the number average molecular weight (Mn) are values converted with standard polystyrene measured by GPC (gel permeation chromatography, manufactured by Water). However, the weight average molecular weight is not limited thereto and may be measured by other methods known in the art. As an example, a method for measuring the weight average molecular weight (Mw) and the number average molecular weight (Mn) is as described in Test Examples 1 and 2 to be described later.

In addition, the polyethylene composition may have a melting point (Tm) of 127 °C or more and 130 °C or less, a crystallization temperature (Tc) of 112 °C or more and 115 °C or less, and a crystallinity (Xc) of 37% or more and 50% or less.

The melting point Tm, the crystallization temperature Tc, and the crystallinity Xc can be measured using a differential scanning calorimeter (DSC, device name: DSC Q20, manufacturer: TA instrument). For example, a method for measuring the melting point Tm, the crystallization temperature Tc, and the crystallinity Xc is as described in Test Example 2 to be described later.

Meanwhile, the polyethylene composition according to one embodiment of the present disclosure includes the first ethylene-alpha olefin copolymer (a) in an amount of 60 wt% or more and 90 wt% or less, and the second ethylene-alpha olefin copolymer (b) in an amount of 10 wt% or more and 40 wt% or less. Preferably, the first ethylene-alpha olefin copolymer (a) may be included in an amount of 65 wt% or more, 67 wt% or more, or 70 wt% or more, and 85 wt% or less, 83 wt% or less, or 80 wt% or less. In addition, the second ethylene-alpha olefin copolymer (b) may be included in an amount of 15 wt% or more, 17 wt% or more, or 20 wt% or more, and 35 wt% or less, 33 wt% or less, or 30 wt% or less.

When combining the first and second ethylene-alpha olefin copolymers in an appropriate amount, the composition of one embodiment can satisfy an appropriate crystal structure and the tie molecule fraction, and thus can satisfy all the excellent physical properties described above.

In the polyethylene composition, the first and second ethylene-alpha olefin copolymers may each be a copolymer of ethylene and an alpha olefin having 3 to 20 carbon atoms. In a more specific embodiment, it may be a copolymer of ethylene and 1-butene, 1-hexene or 1-octene. In a specific embodiment, these first and second ethylene-alpha olefin copolymers may be the same or different from each other. For example, the first ethylene-alpha olefin copolymer (a) may be an ethylene/1-hexene copolymer, and the second ethylene-alpha olefin copolymer (b) may be an ethylene/1-octene copolymer.

**(First ethylene-alpha olefin copolymer (a))**

In the polyethylene composition according to an embodiment of the present disclosure, the first ethylene-alpha olefin copolymer (a) has excellent mechanical properties and is suitable for producing a biaxially stretched film having

good stretchability and high mechanical properties with an appropriate balance between crystallinity and processability.

Specifically, the first ethylene-alpha olefin copolymer (a) has a density of 0.930 g/cm$^3$ to 0.960 g/cm$^3$ and a melt index ($MI_{2.16}$, 190 °C, 2.16 kg load) of 0.2 g/10min to 2.0 g/10 min.

Preferably, the first ethylene-alpha olefin copolymer (a) may have a density of 0.933 g/cm$^3$ or more, 0.935 g/cm$^3$ or more, 0.938 g/cm$^3$ or more, or 0.941 g/cm$^3$ or more, and 0.955 g/cm$^3$ or less, 0.950 g/cm$^3$ or less, or 0.948 g/cm$^3$ or less.

In addition, the first ethylene-alpha olefin copolymer (a) may have a melt index ($MI_{2.16}$, 190 °C, 2.16 kg load) of 0.2 g/10 min or more, and 1.5 g/10 min or less, 1.0 g/10 min or less, or 0.6 g/10 min or less.

The first ethylene-alpha olefin copolymer (a) may have a number average molecular weight (Mn) of 12,000 g/mol or more and 50,000 g/mol or less, a weight average molecular weight (Mw) of 100,000 g/mol or more and 250,000 g/mol or less, and a molecular weight distribution (Mw/Mn) of 3.0 or more and 20.0 or less.

Preferably, the number average molecular weight (Mn) of the first ethylene-alpha olefin copolymer (a) may be 13,000 g/mol or more, 14,000 g/mol or more, or 15,000 g/mol or more, and 40,000 g/mol or less, 30,000 g/mol or less, or 28,000 g/mol or less.

In addition, the weight average molecular weight (Mw) of the first ethylene-alpha olefin copolymer (a) may be 105,000 g/mol or more, 110,000 g/mol or more, or 114,000 g/mol or more, and 230,000 g/mol or less, 210,000 g/mol or less, or 200,000 g/mol or less.

In addition, the molecular weight distribution (Mw/Mn) of the first ethylene-alpha olefin copolymer (a) may be 3.5 or more, 4.0 or more, or 4.1 or more, and 17.0 or less, 15.0 or less, or 13.1 or less.

The first ethylene-alpha olefin copolymer (a) may have at least one of the above-described physical properties, and may have all of the above-described physical properties to exhibit excellent mechanical strength.

The first ethylene-alpha olefin copolymer (a) may include at least one alpha-olefin selected from the group consisting of 1-butene, 1-pentene, 1-hexene, 4-methyl-1-pentene, 1-octene, 1-decene, 1-dodecene, 1-tetradecene, 1-hexadecene, 1-octadecene, 1-eicosene, and a mixture thereof together with ethylene.

Preferably, the first ethylene-alpha olefin copolymer (a) may be an ethylene/1-hexene copolymer.

When the first ethylene-alpha olefin copolymer (a) is the above-described copolymer, the above-described physical properties can be more easily achieved. However, the type of the first ethylene-alpha olefin copolymer (a) is not limited thereto, and various types known in the art may be used as long as they can exhibit the above-mentioned physical properties.

Meanwhile, the first ethylene-alpha olefin copolymer (a) having the above physical properties may be prepared in the presence of a metallocene catalyst.

Specifically, the first ethylene-alpha olefin copolymer (a) may be prepared by copolymerizing ethylene and a comonomer while introducing hydrogen gas in the presence of a catalyst composition including a first metallocene compound represented by the following Chemical Formula 1 and a second metallocene compound represented by the following Chemical Formula 2 in a molar ratio of 1:1 to 1:8:

[Chemical Formula 1] $(Cp^1R^a)_m(Cp^2R^b)M^2Z^2_{3-m}$

in Chemical Formula 1,

$M^2$ is a Group 4 transition metal;

$Cp^1$ and $Cp^2$ are each independently cyclopentadienyl unsubstituted or substituted with a $C_{1-20}$ hydrocarbon;

$R^a$ and $R^b$ are the same as or different from each other, and are each independently hydrogen, $C_{1-20}$ alkyl, $C_{1-20}$ alkoxy, $C_{2-20}$ alkoxyalkyl, $C_{6-20}$ aryl, $C_{6-20}$ aryloxy, $C_{2-20}$ alkenyl, $C_{7-40}$ alkylaryl, $C_{7-40}$ arylalkyl, $C_{8-40}$ arylalkenyl, $C_{2-20}$ alkynyl, or a substituted or unsubstituted $C_{2-20}$ heteroaryl containing at least one heteroatom selected from the group consisting of N, O and S, provided that at least one of $R^a$ and $R^b$ is not hydrogen;

each $Z^2$ is independently halogen, $C_{1-20}$ alkyl, $C_{2-20}$ alkenyl, $C_{7-40}$ alkylaryl, $C_{7-40}$ arylalkyl, $C_{6-20}$ aryl, substituted or unsubstituted $C_{1-20}$ alkylidene, a substituted or unsubstituted amino group, $C_{2-20}$ alkylalkoxy, or $C_{7-40}$ arylalkoxy; and

m is 1 or 0;

[Chemical Formula 2]

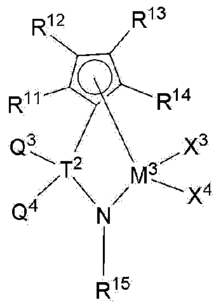

in Chemical Formula 2,

$M^3$ is a Group 4 transition metal,

$T^2$ is carbon, silicon or germanium,

$X^3$ and $X^4$ are the same as or different from each other, and are each independently halogen or $C_{1-20}$ alkyl,

$R^{11}$ to $R^{14}$ are the same as or different from each other, and are each independently hydrogen, $C_{1-20}$ alkyl, $C_{2-20}$ alkenyl, $C_{6-20}$ aryl, $C_{7-20}$ alkylaryl, $C_{7-20}$ arylalkyl, or two or more of $R^{11}$ to $R^{14}$ adjacent to each other are connected to each other to form a substituted or unsubstituted aliphatic ring, a substituted or unsubstituted aromatic ring, or a substituted or unsubstituted heteroaromatic ring containing at least one selected from the group consisting of N, O and S,

$Q^3$ and $Q^4$ are the same as or different from each other, and are each independently $C_{1-20}$ alkyl, $C_{2-20}$ alkenyl, $C_{6-30}$ aryl, or $C_{2-20}$ alkoxyalkyl, and

$R^{15}$ is $C_{1-20}$ alkyl, $C_{2-20}$ alkenyl, or $C_{6-30}$ aryl.

Unless otherwise specified herein, following terms may be defined as follows.

The halogen may be fluorine (F), chlorine (Cl), bromine (Br) or iodine (I).

The $C_{1-20}$ alkyl group may be a linear, branched or cyclic alkyl group. Specifically, the $C_{1-20}$ alkyl group may be a $C_{1-15}$ linear alkyl group; a $C_{1-10}$ linear alkyl group; a $C_{1-5}$ linear alkyl group; a $C_{3-20}$ branched or cyclic alkyl group; a $C_{3-15}$ branched or cyclic alkyl group; or a $C_{3-10}$ branched or cyclic alkyl group. More specifically, the $C_{1-20}$ alkyl group may be a methyl group, an ethyl group, an n-propyl group, an iso-propyl group, an n-butyl group, an iso-butyl group, a tert-butyl group, an n-pentyl group, an iso-pentyl group, a neo-pentyl group, a cyclohexyl group or the like.

The $C_{2-20}$ alkenyl group may be a linear, branched, or cyclic alkenyl group. Specifically, the $C_{2-20}$ alkenyl group may be a $C_{2-20}$ linear alkenyl group, a $C_{2-10}$ linear alkenyl group, a $C_{2-5}$ linear alkenyl group, a $C_{3-20}$ branched alkenyl group, a $C_{3-15}$ branched alkenyl group, a $C_{3-10}$ branched alkenyl group, a $C_{5-20}$ cyclic alkenyl group, or a $C_{5-10}$ cyclic alkenyl group. More specifically, the $C_{2-20}$ alkenyl group may be an ethenyl group, a propenyl group, a butenyl group, a pentenyl group, a cyclohexenyl group, or the like.

The $C_{6-20}$ aryl may be a monocyclic, bicyclic or tricyclic aromatic hydrocarbon, and includes monocyclic or condensed aryl. Specifically, the $C_{6-20}$ aryl may be phenyl, biphenyl, naphthyl, anthracenyl, phenanthrenyl, fluorenyl, or the like.

The $C_{7-40}$ alkylaryl may be a substituent in which at least one hydrogen of the aryl is substituted with alkyl. Specifically, the $C_{7-40}$ alkylaryl may be methylphenyl, ethylphenyl, n-propylphenyl, iso-propylphenyl, n-butylphenyl, isobutylphenyl, tert-butylphenyl, cyclohexylphenyl, or the like.

The $C_{7-40}$ arylalkyl may include a substituent in which at least one hydrogen of the alkyl is substituted with aryl. Specifically, the $C_{7-40}$ arylalkyl may be benzyl, phenylpropyl, phenylhexyl, or the like.

The $C_{6-20}$ aryloxy may be phenoxy, biphenoxy, naphthoxy, or the like, but the present disclosure is not limited thereto.

The $C_{1-20}$ alkoxy group may be a methoxy group, an ethoxy group, a phenyloxy group, a cyclohexyloxy group, or the like, but the present disclosure is not limited thereto.

The $C_{2-20}$ alkoxyalkyl group is a functional group in which at least one hydrogen of the alkyl group is substituted with an alkoxy group, and specifically, it may be an alkoxyalkyl group such as a methoxymethyl group, a methoxyethyl group, an ethoxymethyl group, an iso-propoxymethyl group, an iso-propoxyethyl group, an iso-propoxyhexyl group, a tert-butoxymethyl group, a tert-butoxyethyl group, a tert-butoxyhexyl group, or the like, but the present disclosure is not limited thereto.

The $C_{1-20}$ alkylsilyl group or the $C_{1-20}$ alkoxysilyl group is a functional group in which 1 to 3 hydrogens of $-SiH_3$ are substituted with 1 to 3 alkyl groups or alkoxy groups described above, and specifically, it may be an alkylsilyl group such as a methylsilyl group, a dimethylsilyl group, a trimethylsilyl group, a dimethylethylsilyl group, a diethylmethylsilyl group or a

dimethylpropylsilyl group; an alkoxysilyl group such as a methoxysilyl group, a dimethoxysilyl group, a trimethoxysilyl group or a dimethoxyethoxysilyl group; or an alkoxyalkylsilyl group such as a methoxydimethylsilyl group, a diethoxymethylsilyl group or a dimethoxypropylsilyl group, but the present disclosure is not limited thereto.

The $C_{1-20}$ silylalkyl group is a functional group in which at least one hydrogen of the alkyl group is substituted with a silyl group, and specifically, it may be $-CH_2-SiH_3$, a methylsilylmethyl group or a dimethylethoxysilylpropyl group, or the like, but the present disclosure is not limited thereto.

The sulfonate group has a structure of $-O-SO_2-R'$, wherein R' may be a $C_{1-20}$ alkyl group. Specifically, the $C_{1-20}$ sulfonate group may be a methanesulfonate group, a phenylsulfonate group, or the like, but the present disclosure is not limited thereto.

The heteroaryl is a $C_{2-20}$ heteroaryl containing at least one of N, O, and S as a heterogeneous element, and includes monocyclic or condensed heteroaryl. Specifically, it may be xanthene, thioxanthen, a thiophene group, a furan group, a pyrrole group, an imidazole group, a thiazole group, an oxazole group, an oxadiazole group, a triazole group, a pyridyl group, a bipyridyl group, a pyrimidyl group, a triazine group, an acridyl group, a pyridazine group, a pyrazinyl group, a quinolinyl group, a quinazoline group, a quinoxalinyl group, a phthalazinyl group, a pyrido-pyrimidinyl group, a pyrido-pyrazinyl group, a pyrazino-pyrazinyl group, an isoquinoline group, an indole group, a carbazole group, a benzoxazole group, a benzoimidazole group, a benzothiazole group, a benzocarbazole group, a benzothiophene group, a dibenzothiophene group, a benzofuranyl group, a phenanthroline group, an isoxazolyl group, a thiadiazolyl group, a phenothiazinyl group, a dibenzofuranyl group, or the like, but the present disclosure is not limited thereto.

In addition, the Group 4 transition metal may be titanium (Ti), zirconium (Zr), hafnium (Hf), or rutherpodium (Rf), and specifically titanium (Ti), zirconium (Zr), or hafnium (Hf). More specifically, it may be zirconium (Zr) or hafnium (Hf), but is not limited thereto.

In addition, the group 13 element may be boron (B), aluminum (Al), gallium (Ga), indium (In), or thallium (Tl), and specifically, boron (B), or aluminum (Al). However, it is not limited thereto.

The above-mentioned substituents may be optionally substituted with one or more substituents selected from the group consisting of a hydroxyl group; halogen; an alkyl or alkenyl, aryl, alkoxy group; an alkyl or alkenyl, aryl, alkoxy group containing at least one heteroatom of Group 14 to 16 heteroatoms; a silyl group; an alkylsilyl or alkoxysilyl group; a phosphine group; a phosphide group; a sulfonate group; and a sulfone group within the range of exhibiting the same or similar effects as the desired effects.

In addition, "two neighboring substituents are connected with each other to form an aliphatic or aromatic ring" means that the atom(s) of two substituents and the atom(s) to which the two substituents are bonded are connected with each other to form a ring. Specifically, examples in which $R_9$ and $R_{10}$ of $-NR_9R_{10}$ are connected with each other to form an aliphatic ring include a piperidinyl group, and examples in which $R_9$ and $R_{10}$ of $-NR_9R_{10}$ are connected with each other to form an aromatic ring include a pyrrolyl group.

In the catalyst composition, the first metallocene compound represented by the Chemical Formula 1 is a non-crosslinked compound including ligands of $Cp^1$ and $Cp^2$, and is advantageous for mainly producing a low molecular weight copolymer having a low SCB (short chain branch) content.

Specifically, in the Chemical Formula 1, the ligands of $Cp^1$ and $Cp^2$ may be the same or different from each other, and each may be cyclopentadienyl and substituted with one or more, or one to three $C_{1-10}$ alkyls. As the ligands of $Cp^1$ and $Cp^2$ have a pair of non-covalent electrons capable of acting as a Lewis base, high polymerization activity may be achieved. Particularly, as the ligands of $Cp^1$ and $Cp^2$ are cyclopentadienyl with relatively little steric hindrance, they exhibit high polymerization activity and low hydrogen reactivity, and thus polyethylene having a low molecular weight can be polymerized with high activity.

In addition, the ligands of $Cp^1$ and $Cp^2$ can easily control properties such as chemical structure, molecular weight, molecular weight distribution, mechanical properties, and transparency of the polyethylene to be prepared by adjusting the degree of steric hindrance effect depending on the type of the substituted functional groups. Specifically, the ligands of $Cp^1$ and $Cp^2$ are substituted with $R^a$ and $R^b$, respectively, wherein $R^a$ and $R^b$ are the same as or different from each other, and each may independently be hydrogen, $C_{1-20}$ alkyl, $C_{2-20}$ alkoxyalkyl, $C_{7-40}$ arylalkyl, or substituted or unsubstituted $C_{2-12}$ heteroaryl containing at least one heteroatom selected from the group consisting of N, O and S, and more specifically $C_{1-10}$ alkyl, $C_{2-10}$ alkoxyalkyl, $C_{7-20}$ arylalkyl, or substituted or unsubstituted $C_{4-12}$ heteroaryl containing at least one heteroatom selected from the group consisting of N, O and S.

Further, $M^2Z^2_{3-m}$ presents between the ligands of $Cp^1$ and $Cp^2$, and $M^2Z^2_{3-m}$ may affect storage stability of metal complex. In order to effectively ensure this effect, $Z^1$ may each independently be halogen or $C_{1-20}$ alkyl, and more specifically F, Cl, Br or I. In addition, $M^2$ may each independently be Ti, Zr or Hf; Zr or Hf; or Zr.

The first metallocene compound may be a compound in which each of $Cp^1$ and $Cp^2$ is an unsubstituted or substituted cyclopentadienyl group, and $R^a$ and $R^b$ are each independently hydrogen, $C_{1-10}$ alkyl, $C_{2-10}$ alkoxyalkyl, or $C_{7-20}$ arylalkyl, wherein at least one of $R^a$ and $R^b$ is an alkoxyalkyl group such as t-butoxyhexyl group, more specifically, a substituent of $-(CH_2)_p-OR^c$ (wherein $R^c$ is a linear or branched alkyl group having 1 to 6 carbon atoms, and p is an integer of 2 to 4). In addition, this case shows a low conversion to the comonomer compared to other Cp-based catalysts not

including the above substituent in the preparation of polyethylene using a comonomer, so that a low molecular weight polyethylene in which the degree of copolymerization or comonomer distribution is controlled can be prepared. In addition, when the first metallocene compound having the above structure is supported on a support, the $-(CH_2)_p-OR^c$ group among the substituents can form a covalent bond through close interaction with the silanol group on the surface of the silica used as the support. Therefore, stable supported polymerization is possible.

The first metallocene compound represented by the Chemical Formula 1 may be a compound represented by one of the following structural formulae, but is not limited thereto:

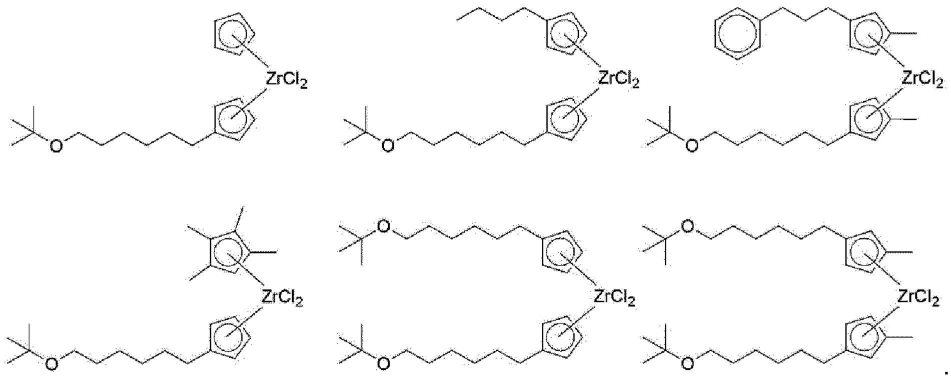

The first metallocene compound represented by the Chemical Formula 1 may be synthesized by applying known reactions, and a more detailed synthesis method may be understood with reference to Examples.

Meanwhile, in one embodiment of the present disclosure, the second metallocene compound represented by the Chemical Formula 2 includes an aromatic ring compound containing cyclopentadienyl or a derivative thereof and a nitrogen atom, and has a structure in which the aromatic ring compound and the nitrogen atom are cross-linked by $T^2Q^3Q^4$, which is a bridge group. The second metallocene compound having such a specific structure is applied to the polymerization reaction of the ethylene/1-hexene copolymer to exhibit high activity and copolymerizability, and can provide an olefin copolymer having a high molecular weight.

In particular, the second metallocene compound represented by the Chemical Formula 2 has a well-known structure of CGC (constrained geometry catalyst), so that comonomer incorporation is excellent, and the distribution of the comonomer is controlled by the electronic and steric characteristics of the ligand. These properties control ASL (average ethylene sequence length) to increase the middle and high molecular weight regions in the molecular weight distribution, thereby increasing the tie molecule fraction and the entanglement of polymer chains. Accordingly, it is easy to prepare a polyethylene resin exhibiting long-term stability and processability together with excellent pipe resistance to internal pressure.

$M^3$ of the metallocene compound represented by the Chemical Formula 2 may be a Group 4 transition metal, and may preferably be titanium (Ti), zirconium (Zr), or hafnium (Hf).

Preferably, $T^2$ in Chemical Formula 2 may be silicon.

Preferably, $X^3$ and $X^4$ in Chemical Formula 2 may each independently be methyl or chlorine (Cl).

Preferably, $R^{11}$ to $R^{14}$ in Chemical Formula 2 are the same as or different from each other, and each may independently be methyl or phenyl.

Preferably, two or more of $R^{11}$ to $R^{14}$ adjacent to each other in the Chemical Formula 2 are connected with each other to form a substituted or unsubstituted aliphatic ring, a substituted or unsubstituted aromatic ring, or a substituted or unsubstituted heteroaromatic ring containing at least one selected from the group consisting of **N,** O and S. For example, in Chemical Formula 2, as two or more of $R^{11}$ to $R^{14}$ adjacent to each other are connected to form an aliphatic, aromatic, or heteroaromatic ring, an indenyl group, a fluorenyl group, a benzothiophene group, or a dibenzothiophene group in which cyclopentadiene is fused may be formed. In addition, the indenyl group, fluorenyl group, benzothiophene group, and dibenzothiophene group may be substituted with one or more substituents.

Preferably, $R^{15}$ to $R^{16}$ in Chemical Formula 2 may be the same as or different from each other, and may each independently be methyl, ethyl, phenyl, propyl, hexyl, or tert-butoxyhexyl.

Preferably, $R^{17}$ in Chemical Formula 2 may be methyl, ethyl, n-propyl, iso-propyl, n-butyl, or tert-butyl.

As the second metallocene compound capable of providing a polyethylene resin excellent in both long-term stability and processability as well as resistance to internal pressure due to the increased middle and high molecular weight regions, the metallocene compound of the Chemical Formula 2 may be any one selected from the group consisting of the following compounds, but the present disclosure is not limited thereto:

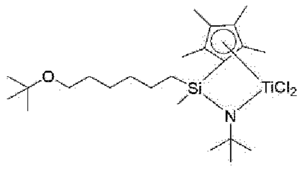
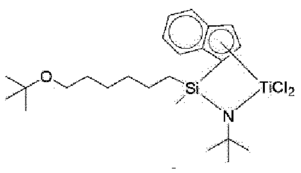
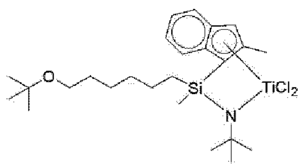

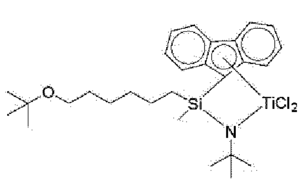
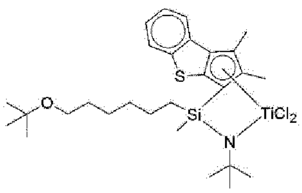

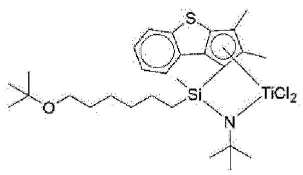
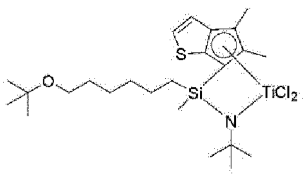
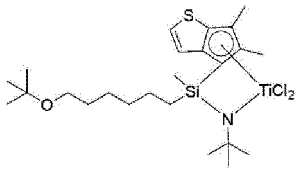

The second metallocene compound represented by the Chemical Formula 2 may be synthesized by applying known reactions. Specifically, it may be prepared by connecting a nitrogen compound and a cyclopentadiene derivative with a bridge compound to prepare a ligand compound, and then adding a metal precursor compound to perform metalation. However, the method is not limited thereto, and a more detailed synthesis method may be understood with reference to Examples.

The second metallocene compound of Chemical Formula 2 has excellent activity and can polymerize a high molecular weight polyethylene resin. In particular, even when used by being supported on a support, it exhibits high polymerization activity, so that a polyethylene resin having an ultra-high molecular weight can be prepared.

In addition, even when a polymerization reaction is performed with hydrogen to prepare a polyethylene resin having a high molecular weight along with a wide molecular weight distribution, the second metallocene compound of Chemical Formula 2 according to the present disclosure exhibits low hydrogen reactivity, so that it is possible to copolymerize a polyethylene resin having an ultra-high molecular weight with high activity. Therefore, even when used in combination with a catalyst having other characteristics, a polyethylene resin satisfying the characteristics of high molecular weight can be prepared without deterioration in activity, and thus a polyethylene resin having a wide molecular weight distribution while including a high molecular weight polyethylene resin can be easily prepared.

As described above, in the catalyst composition, the first metallocene compound represented by the Chemical Formula 1 may mainly contribute to making a low molecular weight copolymer having a low SCB content, and the second metallocene compound represented by the Chemical Formula 2 may mainly contribute to making a high molecular weight copolymer having a high SCB content. More specifically, the catalyst composition exhibits high comonomer incorporation with respect to the comonomer in the high molecular weight region of the copolymer by the second metallocene compound, and low comonomer incorporation with respect to the comonomer in the low molecular weight region of the copolymer by the first metallocene compound. As a result, a polyethylene resin exhibiting excellent heat resistance by having a bimodal molecular weight distribution with excellent mechanical properties can be prepared.

Particularly, controlling the content ratio of the first and second metallocene compounds in the catalyst composition may enable the above-described physical properties and further enhance the improvement effect. Specifically, when including the second metallocene compound in a higher content than the first metallocene compound in the catalyst composition, the middle and high molecular weight regions in the molecule are increased to increase the tie molecule fraction and the entanglement of polymer chains, thereby optimizing the ratio of the high molecular weight region and the low molecular weight region.

Specifically, the first and second metallocene compounds should be included in a molar ratio of 1:1 to 1:8. Preferably, the first and second metallocene compounds may be included in a molar ratio of 1:1 to 1:7, 1:1 to 1:6, or 1:1 to 1:5.5. When the first and second metallocene compounds are included within the above range, the balance between mechanical properties and elongation of the polyethylene resin thus prepared is controlled. Accordingly, it maintains mechanical properties, productivity, and stretching stability equal to or superior to those of the conventional ones, and may improve high shrinkage resistance, printability, and transparency.

Meanwhile, the first and second metallocene compounds have the above-described structural characteristics, so they may be stably supported on a support.

In this case, the first and second metallocene compounds are used in a state supported on the support. When used as a supported catalyst, the polymer to be prepared has excellent particle shape and bulk density, and the catalyst can be suitably used in conventional slurry polymerization, bulk polymerization, and gas phase polymerization.

The support may be silica, alumina, magnesia, silica-alumina, or silicamagnesia, and it may usually contain oxides, carbonates, sulfates, or nitrates such as $Na_2O$, $K_2CO_3$, $BaSO_4$, $Mg(NO_3)_2$ and the like. Among the above-mentioned supports, the silica support has little catalyst released from the surface of the support in the propylene polymerization process, because the transition metal compound is supported by chemical bonding with a reactive functional group such as a siloxane group present on the surface of the silica support. As a result, when the polypropylene is prepared by slurry polymerization or gas phase polymerization, a fouling phenomenon, sticking to the wall surface of the reactor or with each other, may be minimized.

In addition, the support may be surface-modified by a calcination or drying process in order to increase supporting efficiency and minimize leaching and fouling. Through the surface modification step as described above, moisture on the surface of the support that inhibits the reaction with the supported component may be removed, and the content of reactive functional groups capable of chemical bonding with the supported components, for example, a hydroxyl group and a siloxane group, may be increased.

Specifically, the calcination or drying process of the support may be performed in a range from a temperature at which moisture disappears from the surface of the support to a temperature at which reactive functional groups, particularly hydroxyl groups (OH groups) present on the surface, are completely eliminated. Specifically, the temperature may be 150 to 600 °C, or 200 to 500 °C. When the temperature is low, less than 150 °C, the moisture removal efficiency is low, and as a result, the moisture remaining on the support may react with the cocatalyst to lower the supporting efficiency. When the temperature is excessively high, higher than 600 °C, pores on the surface of the support may be combined with each other to reduce specific surface area, and many reactive functional groups such as hydroxyl groups or silanol groups may be lost from the surface, leaving only siloxane groups. Thus, reactive sites with cocatalyst may be reduced, which is not preferable.

When the first and second metallocene compounds are supported on a support and the support is silica, the first and second metallocene compounds may be supported in a total amount of 40 μmol or more, or 80 μmol or more, and 240 μmol or less, or 160 μmol or less based on 1 g of silica. When supported within the above range, it may exhibit an appropriate supporting activity, which may be advantageous in terms of maintaining the activity of the catalyst and economic feasibility.

In addition, the catalyst composition may further include a cocatalyst in terms of improving high activity and process stability.

In the hybrid supported metallocene catalyst of the present disclosure, the type and content of the cocatalyst additionally included are as described above, and specific details are omitted.

For example, among the compounds described above, the cocatalyst may be, more specifically, an alkylaluminoxane-based cocatalyst such as methylaluminoxane.

Further, the alkylaluminoxane-based cocatalyst stabilizes the metallocene compounds and acts as a Lewis acid, so that further enhances catalytic activity by including a metal element capable of forming a bond with a functional group introduced into a bridge group of the second metallocene compound through Lewis acid-base interaction.

In addition, the amount of the cocatalyst used may be appropriately adjusted depending on desired properties or effects of the catalyst and the resin composition. For example, when silica is used as the support, the cocatalyst may be supported in an amount of 8 mmol or more, or 10 mmol or more, and 25 mmol or less, or 20 mmol or less based on a weight of the support, for example, 1 g of silica.

In addition, the catalyst composition described above may be used by itself for polymerization, or may be used in a prepolymerized state by contacting with propylene monomers before the use in a polymerization reaction. In this case, the preparation method according to an embodiment of the present disclosure may further include a prepolymerization step of contacting the catalyst composition with ethylene monomers before preparing the polyethylene by a polymerization reaction.

In addition, the catalyst composition may be dissolved or diluted in an aliphatic hydrocarbon solvent having 5 to 12 carbon atoms such as pentane, hexane, heptane, nonane, decane, and an isomer thereof, an aromatic hydrocarbon solvent such as toluene, and benzene, or a hydrocarbon solvent substituted with chlorine such as dichloromethane, and chlorobenzene, and then injected. The solvent used herein is preferably used after removing a small amount of water or air, which acts as a catalyst poison, by treating with a small amount of alkyl aluminum. It is also possible to further use the cocatalyst.

Meanwhile, the polymerization process may be performed by contacting ethylene and a comonomer in the presence of the above-described catalyst composition. In particular, the polymerization reaction may be performed in a bimodal type using two or more reactors or in a single polymerization reactor.

The polymerization may be performed at a temperature of 25 °C to 500 °C, preferably 25 °C to 200 °C, and more preferably 50 °C to 150 °C. In addition, the polymerization may be performed at a pressure of 1 $kgf/cm^2$ to 100 $kgf/cm^2$,

preferably 1 $kgf/cm^2$ to 50 $kgf/cm^2$, and more preferably 5 $kgf/cm^2$ to 30 $kgf/cm^2$.

In addition, in the copolymerization process, the input of 1-hexene as a comonomer may be about 4.0 wt% to about 6.0 wt% based on the total input weight of ethylene. More specifically, the 1-hexene input may be about 4.1 wt% or more, about 4.2 wt% or more, about 4.3 wt% or more, about 4.4 wt% or more, or about 4.5 wt% or more, and about 5.9 wt% or less, about 5.8 wt% or less, 5.6 wt% or less, about 5.4 wt% or less, about 5.2 wt% or less, or about 5.0 wt% or less.

Meanwhile, the polyethylene resin according to the present disclosure may be prepared by copolymerizing ethylene and a comonomer in the presence of the above-described catalyst composition while introducing hydrogen gas.

For example, the hydrogen gas may be introduced in an amount of 35 ppm to 250 ppm, 40 ppm to 200 ppm, 50 ppm to 190 ppm, 55 ppm to 180 ppm, 58 ppm to 170 ppm, or 60 ppm to 145 ppm based on the weight of ethylene.

In the step of supporting the catalyst precursor on the cocatalyst-supported support, the supported catalyst may be prepared by adding the first and second transition metal compounds to the cocatalyst-supported support, stirring, and then further adding a cocatalyst.

In the hybrid supported metallocene catalyst according to the embodiment, the amount of the support, cocatalyst, cocatalyst-supported support and transition metal compound used may be appropriately adjusted depending on desired properties or effects of the supported catalyst.

Meanwhile, when the molar ratio of the first transition metal compound and the second transition metal compound (first transition metal compound: second transition metal compound) is less than 1:0.3, it is difficult to produce ultra-low-density polyethylene as comonomer incorporation decreases. When the ratio exceeds 1:5.5, it is difficult to reproduce the molecular structure of the desired polymer.

At this time, a supported amount of the metallocene compound supported on a silica support may be 0.01 to 1 mmol/g based on 1 g of the support. That is, it is preferable to control the amount within the above-described range in consideration of the effect that the metallocene compound contributes to the catalyst.

When preparing the hybrid supported catalyst, a reaction solvent may be a hydrocarbon solvent such as pentane, hexane, and heptane; or an aromatic solvent such as benzene and toluene.

For details on the preparation method of the supported catalyst, refer to Examples to be described later. However, the preparation method of the supported catalyst is not limited to this description. The preparation method may further include a step which is usually carried out in the technical field of the present invention, and the step(s) of the preparation method may be changed by the step(s) usually changeable.

Meanwhile, the above-described polyethylene copolymer may be prepared by a method including the step of copolymerizing ethylene and an alpha-olefin in the presence of the above-described hybrid supported metallocene catalyst.

The above-described hybrid supported catalyst can exhibit excellent supporting performance, catalytic activity, and high comonomer incorporation, and can prepare a polyethylene copolymer capable of producing a biaxially stretched film having excellent expandable processing area characteristics and mechanical properties.

The preparation of the first ethylene-alpha olefin copolymer (a) may be carried out by a slurry polymerization method using ethylene and an alpha-olefin as raw materials in the presence of the above-described hybrid supported catalyst with a conventional equipment and contact technology.

The preparation method of the first ethylene-alpha olefin copolymer (a) may copolymerize ethylene and an alpha-olefin using a continuous slurry polymerization reactor, a loop slurry reactor, or the like, but the present disclosure is not limited thereto.

That is, in the case of the hybrid supported metallocene catalyst of the present disclosure in which the first metallocene compound and the second metallocene compound are supported within the above molar ratio, both processability and shrinkage can be further improved along with mechanical properties of the polyethylene copolymer due to the interaction of two or more catalysts.

In the hybrid supported metallocene catalyst of the present disclosure, the support for supporting the first metallocene compound and the second metallocene compound, the additionally included cocatalyst, and the polymerization process are as described above with respect to the first ethylene-alpha olefin copolymer (a), and the specific details are omitted.

The first ethylene-alpha olefin copolymer (a) according to the present disclosure can be prepared by copolymerizing ethylene and alpha-olefin using the above-described supported metallocene catalyst.

By the above preparation method, the first ethylene-alpha olefin copolymer (a) having the above physical properties can be prepared.

**(Second ethylene-alpha olefin copolymer (b))**

In the polyethylene composition of the present disclosure, the second ethylene-alpha olefin copolymer (b), which has excellent flowability to have excellent stretching stability and shrinkage resistance is blended with the above-described first ethylene-alpha olefin copolymer (a), thereby adjusting the balance between mechanical properties and

elongation. Accordingly, it may impart characteristics suitable for manufacturing a biaxially stretched film having high shrinkage resistance, printability, and transparency while maintaining mechanical properties, productivity, and stretching stability equal to or superior to those of the conventional ones.

Specifically, the second ethylene-alpha olefin copolymer (b) has a density of 0.870 g/cm$^3$ to 0.920 g/cm$^3$ and a melt index ($MI_{2.16}$, 190 °C, 2.16 kg load) of 3.0 g/10min to 10.0 g/10 min.

Preferably, the second ethylene-alpha olefin copolymer (b) may have a density of 0.880 g/cm$^3$ or more, 0.890 g/cm$^3$ or more, or 0.895 g/cm$^3$ or more, and 0.915 g/cm$^3$ or less, 0.910 g/cm$^3$ or less, or 0.905 g/cm$^3$ or less.

In addition, the second ethylene-alpha olefin copolymer (b) may have a melt index ($MI_{2.16}$, 190 °C, 2.16 kg load) of 4.0 g/10min or more, 5.0 g/10min or more, or 5.5 g/10min or more, and 9.0 g/10min or less, 8.0 g/10min or less, or 7.0 g/10min or less.

The second ethylene-alpha olefin copolymer (b) may have a number average molecular weight (Mn) of 20,000 g/mol or more and 50,000 g/mol or less, a weight average molecular weight (Mw) of 50,000 g/mol or more and 100,000 g/mol or less, and a molecular weight distribution (Mw/Mn) of 2.0 or more and 4.0 or less.

Preferably, the number average molecular weight (Mn) of the second ethylene-alpha olefin copolymer (b) may be 23,000 g/mol or more, 25,000 g/mol or more, or 28,000 g/mol or more, and 45,000 g/mol or less, 40,000 g/mol or less, or 35,000 g/mol or less.

In addition, the weight average molecular weight (Mw) of the second ethylene-alpha olefin copolymer (b) may be 55,000 g/mol or more, 60,000 g/mol or more, or 65,000 g/mol or more, and 90,000 g/mol or less, 80,000 g/mol or less, or 70,000 g/mol or less.

In addition, the molecular weight distribution (Mw/Mn) of the second ethylene-alpha olefin copolymer (b) may be 2.1 or more, 2.2 or more, or 2.3 or more, and 3.5 or less, 3.0 or less, or 2.5 or less.

The second ethylene-alpha olefin copolymer (b) may have at least one of the above-described physical properties, and may have all of the above-described physical properties to exhibit excellent mechanical strength.

The second ethylene-alpha olefin copolymer (b) may include at least one alpha-olefin selected from the group consisting of 1-butene, 1-pentene, 1-hexene, 4-methyl-1-pentene, 1-octene, 1-decene, 1-dodecene, 1-tetradecene, 1-hexadecene, 1-octadecene, 1-eicosene, and a mixture thereof together with ethylene.

Preferably, the second ethylene-alpha olefin copolymer (b) may be an ethylene/1-octene copolymer.

When the second ethylene-alpha olefin copolymer (b) is the above-described copolymer, the above-described physical properties can be more easily achieved. However, the type of the second ethylene-alpha olefin copolymer (b) is not limited thereto, and various types known in the art may be used as long as they can exhibit the above-mentioned physical properties.

Further, the second ethylene-alpha olefin copolymer (b) may be prepared in the presence of a metallocene catalyst.

Specifically, the second ethylene-alpha olefin copolymer (b) may be prepared by copolymerizing ethylene and a comonomer in the presence of a catalyst composition including a metallocene compound represented by the following Chemical Formula 3:

[Chemical Formula 3]

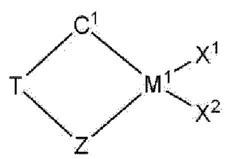

in Chemical Formula 3,

$M^1$ is a Group 4 transition metal;

$X^1$ and $X^2$ are the same as or different from each other, and are each independently halogen, a nitro group, an amido group, a phosphine group, a phosphide group, a C1 to C30 hydrocarbyl group, a C1 to C30 hydrocarbyloxy group, a C2 to C30 hydrocarbyloxyhydrocarbyl group, $-SiH_3$, a C1 to C30 hydrocarbyl(oxy)silyl group, a C1 to C30 sulfonate group, or a C1 to C30 sulfone group;

Z is -O-, -S-, $-NR_a-$, or $-PR_a-$;

$R_a$ is any one of hydrogen, a C1 to C20 hydrocarbyl group, a C1 to C20 hydrocarbyl(oxy)silyl group, and a C1 to C20 silylhydrocarbyl group;

T is

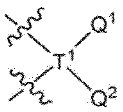 or 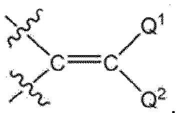,

$T^1$ is C, Si, Ge, Sn or Pb,

$Q^1$ and $Q^2$ are the same as or different from each other, and are each independently any one of hydrogen, a C1 to C30 hydrocarbyl group, a C1 to C30 hydrocarbyloxy group, a C2 to C30 hydrocarbyloxyhydrocarbyl group, $-SiH_3$, a C1 to C30 hydrocarbyl(oxy)silyl group, a halogen-substituted C1 to C30 hydrocarbyl group and $-NR_bR_c$;

$R_b$ and $R_c$ are each independently at least one of hydrogen and a C1 to C30 hydrocarbyl group, or are connected with each other to form an aliphatic or aromatic ring; and

$C^1$ is any one of the ligands represented by the following Chemical Formulae 3a to 3d,

[Chemical Formula 3a]

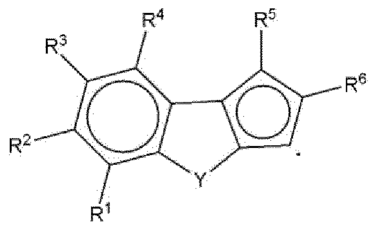

[Chemical Formula 3b]

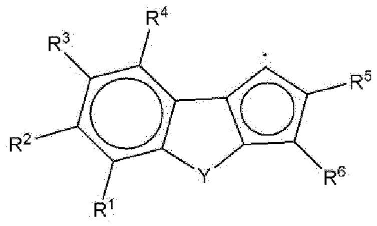

[Chemical Formula 3c]

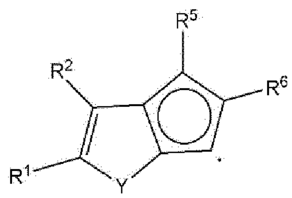

[Chemical Formula 3d]

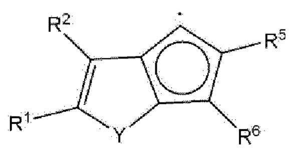

in Chemical Formulae 3a to 3d,

Y is O or S, and

$R^1$ to $R^6$ are the same as or different from each other, and are each independently any one of hydrogen, a C1 to C30 hydrocarbyl group, and a C1 to C30 hydrocarbyloxy group.

Unless otherwise specified herein, following terms may be defined as follows.

The hydrocarbyl group is a monovalent functional group in a hydrogenremoved form from a hydrocarbon, and may include an alkyl group, an alkenyl group, an alkynyl group, an aryl group, an aralkyl group, an aralkenyl group, an aralkynyl group, an alkylaryl group, an alkenylaryl group, an alkynylaryl group, and the like. The C1 to C30 hydrocarbyl group may be a C1 to C20 or C1 to C10 hydrocarbyl group. For example, the hydrocarbyl group may be a linear, branched or cyclic alkyl. More specifically, the C1 to C30 hydrocarbyl group may be a linear, branched or cyclic alkyl group such as a methyl group, an ethyl group, an n-propyl group, an iso-propyl group, an n-butyl group, an iso-butyl group, a tert-butyl group, an n-pentyl group, an n- hexyl group, an n-heptyl group and a cyclohexyl group; or an aryl group such as phenyl, biphenyl, naphthyl, anthracenyl, phenanthrenyl, or fluorenyl. Moreover, it may be alkylaryl such as methylphenyl, ethylphenyl, methylbiphenyl, and methylnaphthyl, or arylalkyl such as phenylmethyl, phenylethyl, biphenylmethyl, and naphthylmethyl. It may also be alkenyl such as allyl, ethenyl, propenyl, butenyl, and pentenyl.

The hydrocarbyloxy group is a functional group in which the hydrocarbyl group is bonded to oxygen. Specifically, the C1 to C30 hydrocarbyloxy group may be a C1 to C20 or C1 to C10 hydrocarbyloxy group. For example, the hydrocarbyloxy group may be a linear, branched or cyclic alkyl. More specifically, the C1 to C30 hydrocarbyloxy group may be a linear, branched or cyclic alkoxy group such as a methoxy group, an ethoxy group, an n-propoxy group, an iso-propoxy group, an n-butoxy group, an iso-butoxy group, a tert-butoxy group, an n-pentoxy group, an n-hexyloxy group, an n-heptoxy group and a cyclohexyloxy group; or an aryloxy group such as a phenoxy group and a naphthalenoxy group.

The hydrocarbyloxyhydrocarbyl group is a functional group in which at least one hydrogen of the hydrocarbyl group is substituted with at least one hydrocarbyloxy group. Specifically, the C2 to C30 hydrocarbyloxyhydrocarbyl group may be a C2 to C20 or C2 to C15 hydrocarbyloxyhydrocarbyl group. For example, the hydrocarbyloxyhydrocarbyl group may be a linear, branched or cyclic alkyl. More specifically, the C2 to C30 hydrocarbyloxyhydrocarbyl group may be an alkoxyalkyl group such as a methoxymethyl group, a methoxyethyl group, an ethoxymethyl group, an iso-propoxymethyl group, an iso-propoxyethyl group, an iso-propoxyhexyl group, a tert-butoxymethyl group, a tert-butoxyethyl group and a tert-butoxyhexyl group; or an aryloxyalkyl group such as a phenoxyhexyl group.

The hydrocarbyl(oxy)silyl group is a functional group in which one to three hydrogens of $-SiH_3$ are substituted with one to three hydrocarbyl or hydrocarbyloxy groups. Specifically, the C1 to C30 hydrocarbyl(oxy)silyl group may be a C1 to C20, C1 to C15, C1 to C10, or C1 to C5 hydrocarbyl(oxy)silyl group. More specifically, the C1 to C30 hydrocarbyl(oxy)silyl group may be an alkylsilyl group such as a methylsilyl group, a dimethylsilyl group, a trimethylsilyl group, a dimethylethylsilyl group, a diethylmethylsilyl group, or a dimethylpropylsilyl group; an alkoxysilyl group such as a methoxysilyl group, a dimethoxysilyl group, a trimethoxysilyl group, or a dimethoxyethoxysilyl group; or an alkoxyalkylsilyl group such as a methoxydimethylsilyl group, a diethoxymethylsilyl group, or a dimethoxypropylsilyl group.

The C1 to C20 silylhydrocarbyl group is a functional group in which at least one hydrogen of the hydrocarbyl group is substituted with a silyl group. The silyl group may be $-SiH_3$ or a hydrocarbyl(oxy)silyl group. Specifically, the C1 to C20 silylhydrocarbyl group may be a C1 to C15 or C1 to C10 silylhydrocarbyl group. More specifically, C1 to C20 silylhydrocarbyl group may be a silylalkyl group such as $-CH_2-SiH_3$; an alkylsilylalkyl group such as a methylsilylmethyl group, a methylsilylethyl group, a dimethylsilylmethyl group, a trimethylsilylmethyl group, a dimethylethylsilylmethyl group, a diethylmethylsilylmethyl group, or a dimethylpropylsilylmethyl group; or an alkoxysilylalkyl group such as a dimethylethoxysilylpropyl group.

The halogen may be fluorine (F), chlorine (Cl), bromine (Br) or iodine (I).

The sulfonate group has a structure of $-O-SO_2-R_4$, and $R_d$ may be a C1 to C30 hydrocarbyl group. Specifically, the C1 to C30 sulfonate group may be a methanesulfonate group, a phenylsulfonate group, or the like.

The C1 to C30 sulfone group has a structure of $-R^{e'}-SO_2-R^{e''}$, and $R^{e'}$ and $R^{e''}$ may be the same as or different from each other, and may each independently be any one of a C1 to C30 hydrocarbyl group. Specifically, the C1 to C30 sulfone group may be a methylsulfonylmethyl group, a methylsulfonylpropyl group, a methylsulfonylbutyl group, a phenylsulfonylpropyl group, or the like.

In this disclosure, "two neighboring substituents are connected with each other to form an aliphatic or aromatic ring" means that the atom(s) of two substituents and the atom(s) to which the two substituents are bonded are connected with each other to form a ring. Specifically, examples in which $R_b$ and $R_c$ or $R_{b'}$ and $R_{c'}$ of $-NR_bR_c$ or $-NR_{b'}R_{c'}$ are connected with each other to form an aliphatic ring include a piperidinyl group, and examples in which $R_b$ and $R_c$ or $R_{b'}$ and $R_{c'}$ of $-NR_bR_c$ or $-NR_{b'}R_{c'}$ are connected with each other to form an aromatic ring include a pyrrolyl group.

The Group 4 transition metal may be titanium (Ti), zirconium (Zr), hafnium (Hf), or rutherfordium (Rf), and may specifically be titanium (Ti), zirconium (Zr), or hafnium (Hf). More specifically, it may be zirconium (Zr), or hafnium (Hf), but the present disclosure is not limited thereto.

Further, the Group 13 element may be boron (B), aluminum (Al), gallium (Ga), indium (In), or thallium (Tl), and may specifically be boron (B) or aluminum (Al), but the present disclosure is not limited thereto.

The above-mentioned substituents may optionally be substituted with one or more substituents selected from the group consisting of a hydroxyl group; halogen; a hydrocarbyl group; a hydrocarbyloxy group; a hydrocarbyl group or a hydrocarbyloxy group containing at least one heteroatom of Group 14 to 16 heteroatoms; a silyl group; a hydrocarbyl(oxy)silyl group; a phosphine group; a phosphide group; a sulfonate group; and a sulfone group within the range of exhibiting the same or similar effect as the desired effect.

In the present disclosure,

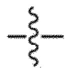

means a bond connected to another substituent.

Specifically, in Chemical Formula 3, Z is $-NR_a-$, wherein the $R_a$ may be a C1 to C10 hydrocarbyl group. Specifically, the $R_a$ may be a linear or branched C1 to C6 alkyl group. More specifically, it may be a tert-butyl group.

In Chemical Formula 3, T is

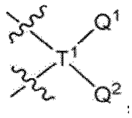

, wherein $T^1$ is carbon (C) or silicon (Si), $Q^1$ and $Q^2$ may each independently be hydrogen, a C1 to C30 hydrocarbyl group, or a C1 to C30 hydrocarbyloxy group. Specifically, $Q^1$ and $Q^2$ may each be a C1 to C10 hydrocarbyl group or a C2 to C12 hydrocarbyloxyhydrocarbyl group. More specifically, $Q^1$ and $Q^2$ may each be a C1 to C6 alkyl group, or a C1 to C6 alkoxy-substituted C1 to C6 alkyl group. For example, $Q^1$ and $Q^2$ may each independently be hydrogen, methyl, ethyl, or tert-butoxy-substituted hexyl. More specifically, $T^1$ is silicon (Si); both $Q^1$ and $Q^2$ are methyl, or one of $Q^1$ and $Q^2$ is methyl and the other is tert-butoxy-substituted hexyl.

Specifically, the metallocene compound represented by the Chemical Formula 3 may be a compound represented by any one of the following Chemical Formulae 3-1 to 3-4.

[Chemical Formula 3-1]

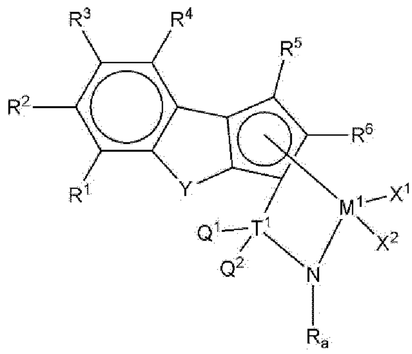

[Chemical Formula 3-2]

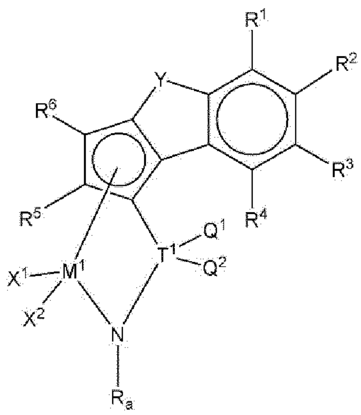

[Chemical Formula 3-3]

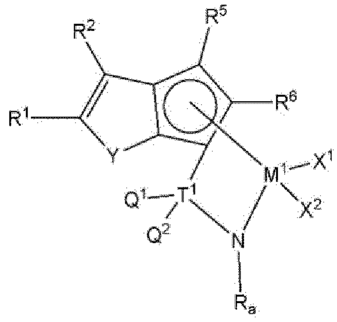

[Chemical Formula 3-4]

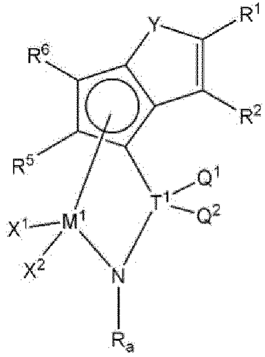

In Chemical Formulae 3-1 to 3-4, $M^1$, $X^1$, $X^2$, $R_a$, $T^1$, $Q^1$, $Q^2$, Y, and $R^1$ to $R^6$ are the same as defined in Chemical Formula 3.

In Chemical Formula 3, $R^1$ to $R^4$ may each be hydrogen or a C1 to C10 hydrocarbyl group, and $R^5$ and $R^6$ may each be a C1 to C10 hydrocarbyl group. Specifically, $R^1$ to $R^4$ may each be hydrogen or C1 to C10 alkyl, and $R^5$ and $R^6$ may each be C1 to C10 alkyl. More specifically, $R^1$ to $R^4$ may each be hydrogen or methyl, and $R^5$ and $R^6$ may be methyl.

In Chemical Formula 3, $M^1$ may be titanium (Ti), zirconium (Zr) or hafnium (Hf), and preferably titanium (Ti).

In addition, in Chemical Formula 3, each of $X^1$ and $X^2$ may be halogen, a C1 to C10 alkyl group, or a C1 to C6 alkyl group, and specifically chlorine or methyl.

In addition, in Chemical Formula 3, the metallocene compound may be represented by one of the following structural formulae.

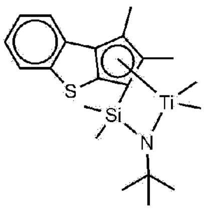

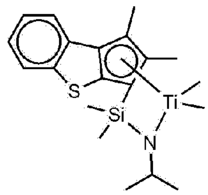

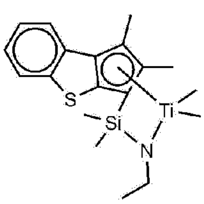

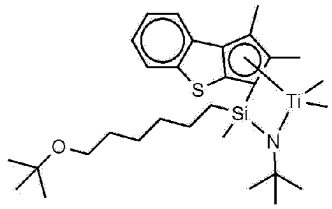

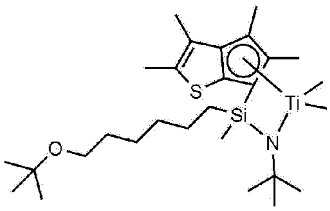

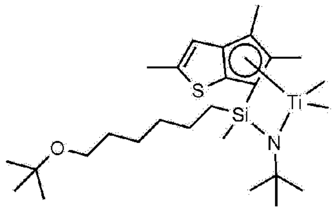

The metallocene compound represented by the above structural formulae may be synthesized by applying known reactions, and a more detailed synthesis method may be understood with reference to Examples and Synthesis Examples.

As described above, the transition metal compound represented by Chemical Formula 3 used in the present disclosure controls the degree of introduction of alpha-olefin monomers in the copolymerization process due to the structural characteristics of the catalyst and exhibits the above-described density, resulting in excellent flowability and stretching processability.

In the present disclosure, the polymerization reaction may be performed by continuously polymerizing ethylene and alpha-olefin monomers while continuously introducing hydrogen in the presence of a catalyst composition containing at least one transition metal compound represented by the Chemical Formula 3. Specifically, it may be performed while introducing hydrogen at 5 to 100 cc/min.

The hydrogen gas suppresses a rapid reaction of the transition metal compound at the initial stage of polymerization, and serves to terminate the polymerization reaction. Accordingly, an ethylene/alpha-olefin copolymer having a narrow molecular weight distribution can be effectively produced by using the hydrogen gas and adjusting the amount thereof.

For example, the hydrogen may be introduced at 5 cc/min or more, 7 cc/min or more, 10 cc/min or more, 15 cc/min or more, or 19 cc/min or more, and 100 cc/min or less, 50 cc/min or less, 45 cc/min or less, 35 cc/min or less, or 29 cc/min or less. When added under the above conditions, the ethylene/alpha-olefin copolymer to be produced can realize the physical properties of the present disclosure.

When the hydrogen gas is introduced at less than 5 cc/min, the polymerization reaction is not uniformly terminated, making it difficult to prepare an ethylene/alpha-olefin copolymer having desired physical properties. When the hydrogen gas is introduced at more than 100 cc/min, the termination reaction occurs too quickly, and thus an ethylene/alpha-olefin copolymer having a very low molecular weight may be produced.

In addition, the polymerization reaction may be performed at 100 °C to 200 °C, and the crystallinity distribution and the molecular weight distribution in the ethylene/alpha-olefin copolymer may be more easily controlled by adjusting the polymerization temperature together with the hydrogen input. Specifically, the polymerization reaction may be performed at 100 °C to 200 °C, 120 °C to 180 °C, 130 °C to 170 °C, or 140 °C to 160 °C, but is not limited thereto.

In the present disclosure, a cocatalyst may be additionally used in the catalyst composition to activate the transition metal compound of the Chemical Formula 3. The cocatalyst is an organometallic compound containing a Group 13 metal, and may specifically include one or more selected from Chemical Formulae 4 to 6 below.

[Chemical Formula 4] $R_8\text{-}[Al(R_7)\text{-}O]_n\text{-}R_9$

in Chemical Formula 4,

$R_7$, $R_8$ and $R_9$ are each independently hydrogen, halogen, $C_{1-20}$ hydrocarbyl, or halogen-substituted $C_{1-20}$ hydrocarbyl, and
n is an integer of 2 or more,

[Chemical Formula 5] $D(R_{10})_3$

in Chemical Formula 5,

D is aluminum or boron, and
$R_{10}$ are each independently halogen, $C_{1-20}$ hydrocarbyl, $C_{1-20}$ hydrocarbyloxy, or halogen-substituted $C_{1-20}$ hydrocarbyl,

[Chemical Formula 6] $[L\text{-}H]^+[W(A)_4]^-$ or $[L]^+[W(A)_4]^-$

in Chemical Formula 6,

L is a neutral or cationic Lewis base,
H is a hydrogen atom,
W is a group 13 element, and
A are each independently any one of $C_{1-20}$ hydrocarbyl; $C_{1-20}$ hydrocarbyloxy; and a substituent in which one or more hydrogen atoms of these substituents are substituted with one or more substituents selected from halogen, $C_{1-20}$ hydrocarbyloxy and $C_{1-20}$ hydrocarbyl(oxy)silyl.

Specifically, in Chemical Formula 6, $[L-H]^+$ is a Bronsted acid.

For example, the $[L-H]^+$ is trimethylammonium; triethylammonium; tripropylammonium; tributylammonium; diethylammonium; trimethylphosphonium; or triphenylphosphonium, wherein $[L]^+$ is N,N-diethylanilinium; or triphenylcarbonium.

In addition, in Chemical Formula 6, W may be $B^{3+}$ or $Al^3$.

The compound represented by the Chemical Formula 4 may function as an alkylating agent and an activating agent, the compound represented by the Chemical Formula 5 may function as an alkylating agent, and the compound represented by the Chemical Formula 6 may function as an activating agent.

More specifically, the compound of Chemical Formula 4 may be an alkylaluminoxane-based compound in which repeating units are bonded in a linear, circular or network shape, and specific examples thereof may include methylaluminoxane (MAO), ethylaluminoxane, isobutylaluminoxane or tertbutylaluminoxane and the like. Non-limiting examples of the compound represented by Chemical Formula 4 may include methyl aluminoxane, ethyl aluminoxane, isobutyl aluminoxane, tert-butyl aluminoxane, and the like.

In addition, non-limiting examples of the compound represented by Chemical Formula 5 may include trimethylaluminum, triethylaluminum, triisobutylaluminum, tripropylaluminum, tributylaluminum, dimethylchloroaluminum, triisopropylaluminum, tri-sec-butylaluminum, tricyclopentyl aluminum, tripentyl aluminum, triisopentyl aluminum, trihexyl aluminum, trioctyl aluminum, ethyldimethyl aluminum, methyl diethyl aluminum, triphenyl aluminum, tri-p-tolyl aluminum, dimethyl aluminum methoxide, dimethyl aluminum ethoxide, and the like.

In addition, non-limiting examples of the compound represented by Chemical Formula 6 may include trimethylammonium tetrakis(pentafluorophenyl)borate, triethylammonium tetrakis(pentafluorophenyl)borate, N,N-dimethylanilinium tetrakis (pentafluorophenyl) borate, N,N-dimethylanilinium n-butyltris(pentafluorophenyl) borate, N,N-dimethylanilinium benzyltris(pentafluorophenyl)borate, N,N-dimethylanilinium tetrakis(4-(t-butyldimethylsilyl)-2,3,5,6-tetrafluorophenyl)borate, N,N-dimethylanilinium tetrakis(4-(triisopropylsilyl)-2,3,5,6-tetrafluorophenyl)borate, N,N-dimethylanilinium pentafluorophenoxytris(pentafluorophenyl)borate, N,N-dimethyl-2,4,6-trimethylanilinium tetrakis(pentafluorophenyl)borate, trimethylammonium tetrakis(2,3,4,6-tetrafluorophenyl) borate, N,N-dimethylanilinium tetrakis(2,3,4,6-tetrafluorophenyl)borate, hexadecyldimethylammonium tetrakis(pentafluorophenyl)borate, N-methyl-N-dodecylanilinium tetrakis(pentafluorophenyl)borate, methyldi(dodecyl)ammonium tetrakis(pentafluorophenyl)borate, and the like.

Among the above compounds, the cocatalyst may be, more specifically, an alkylaluminoxane-based cocatalyst such as methylaluminoxane.

The amount of the cocatalyst used may be appropriately adjusted according to the physical properties or effects of the desired hybrid supported metallocene catalyst.

The cocatalyst may be used in an appropriate amount so that the activation of the transition metal compound of Chemical Formula 3 can sufficiently proceed. The amount of the cocatalyst used may be appropriately adjusted according to the physical properties or effects of the desired hybrid supported metallocene catalyst.

In the present disclosure, the transition metal compound of Chemical Formula 3 may be used in a state supported on the support.

When the transition metal compound of Chemical Formula 3 is supported on a support, a weight ratio of the transition metal compound and the support may be 1:10 to 1:1,000, more specifically 1:10 to 1:500. When the support and the transition metal compound are included within the above weight ratio, an optimal shape can be exhibited. In addition, when the cocatalyst is supported on the support, a weight ratio of the cocatalyst and the support may be 1:1 to 1:100, more specifically 1:1 to 1:50. When the cocatalyst and the support are included within the above weight ratio, it is possible to improve the activity of the catalyst and to optimize the microstructure of the polymer to be produced.

Meanwhile, the support may be silica, alumina, magnesia or a mixture thereof, or may be used in a state containing highly reactive hydroxyl groups or siloxane groups on its surface by removing moisture from the surface after drying these materials at a high temperature. Further, the support dried at a high temperature commonly contains oxide, carbonate, sulfate, and nitrate such as $Na_2O$, $K_2CO_3$, $BaSO_4$, $Mg(NO_3)_2$, and the like.

A drying temperature of the support may preferably be about 200 to 800 °C, more preferably about 300 to 600 °C, and most preferably about 300 to 400 °C. When the drying temperature of the support is less than 200 °C, surface moisture

may react with the cocatalyst due to excessive moisture. When it is greater than 800 °C, pores on the surface of the support may be combined to reduce the surface area, and a lot of hydroxyl groups may be lost on the surface and only siloxane groups may remain, thus decreasing the reaction sites with the cocatalyst, which is not preferable.

The amount of the hydroxyl groups on the surface of the support may preferably be 0.1 to 10 mmol/g, more preferably 0.5 to 5 mmol/g. The amount of the hydroxyl groups on the surface of the support may be controlled by the preparation method and conditions of the support, or drying conditions, for example, temperature, time, vacuum, spray drying, or the like.

In addition, an organoaluminum compound is further added during the polymerization reaction to remove moisture from the reactor, and the polymerization reaction may proceed in the presence of the organoaluminum compound. Specific examples of such organoaluminum compounds may include trialkyl aluminum, dialkyl aluminum halide, alkyl aluminum dihalide, aluminum dialkyl hydride, or alkyl aluminum sesqui halide. More specific examples thereof may include $Al(C_2H_5)_3$, $Al(C_2H_5)_2H$, $Al(C_3H_7)_3$, $Al(C_3H_7)_2H$, $Al(i\text{-}C_4H_9)_2H$, $Al(C_8H_{17})_3$, $Al(C_{12}H_{25})_3$, $Al(C_2H_5)(C_{12}H_{25})_2$, $Al(i\text{-}C_4H_9)(C_{12}H_{25})_2$, $Al(i\text{-}C_4H_9)_2H$, $Al(i\text{-}C_4H_9)_3$, $(C_2H_5)_2AlCl$, $(i\text{-}C_3H_9)_2AlCl$, $(C_2H_5)_3A_{l2}Cl_3$ and the like. These organoaluminum compounds may be continuously added to the reactor and may be added at about 0.1 to 10 mols per 1 kg of reaction medium added to the reactor for adequate moisture removal.

In addition, the polymerization pressure may be about 1 to about 100 $Kgf/cm^2$, preferably about 1 to about 50 $Kgf/cm^2$, and more preferably about 5 to about 30 $Kgf/cm^2$.

In addition, when the transition metal compound is used in a state supported on a support, the transition metal compound may be dissolved or diluted in an aliphatic hydrocarbon solvent having 5 to 12 carbon atoms such as pentane, hexane, heptane, nonane, decane, and an isomer thereof, an aromatic hydrocarbon solvent such as toluene, and benzene, or a hydrocarbon solvent substituted with chlorine such as dichloromethane, and chlorobenzene, and then added. The solvent used herein is preferably used after removing a small amount of water or air, which acts as a catalyst poison, by treating with a small amount of alkyl aluminum. It is also possible to further use the cocatalyst.

The second ethylene-alpha olefin copolymer (b) may be prepared by copolymerizing ethylene and an alpha-olefin using the metallocene catalyst described above.

By the above preparation method, the second ethylene-alpha olefin copolymer (b) having the above physical properties can be prepared.

**(Biaxially stretched film)**

The polyethylene composition having the above physical properties can stably form a biaxially stretched film having high shrinkage resistance, printability and transparency while maintaining excellent mechanical properties, productivity and stretching stability.

Meanwhile, the biaxially stretched film may be manufactured by a conventional film manufacturing method except for using the polyethylene composition described above.

For example, in order to manufacture a polyethylene biaxially stretched film according to the present disclosure, a lab extruder line manufactured from Bruckner may be used (L/D ratio: 42, Screw diameter: 25 mm, Melt/T-Die temperature: 220 °C) to prepare a polyethylene composition sheet having a thickness of 0.75 mm. Thereafter, a polyethylene biaxially stretched film may be prepared by biaxially stretching the polyethylene composition sheet with dimensions of 90 mm x 90 mm in length and width using KARO 5.0 equipment. Specific methods and conditions are as described in Test Example 3 to be described later.

In addition, the polyethylene biaxially stretched film according to the present disclosure may further include an additive well known in the art in addition to the above-described polyethylene copolymer. Specifically, such an additive may include a solvent, a heat stabilizer, an antioxidant, a UV absorber, a light stabilizer, a metal deactivator, a filler, a reinforcing agent, a plasticizer, a lubricant, an emulsifier, a pigment, an optical brightener, a flame retardant, an antistatic agent, a foaming agent, and the like. The type of the additive is not particularly limited, and general additives known in the art may be used.

The polyethylene biaxially stretched film according to one embodiment of the present disclosure prepared by the above method may have improved performance with excellent expandable processing area characteristics and mechanical properties.

The polyethylene biaxially stretched film may have a haze of 0% or more, 0.5% or more, 1.0% or more, 1.5% or more, or 1.6% or more, and less than 2.0%, or 1.9% or less, as measured according to ASTM 1003 standard.

The polyethylene biaxially stretched film may have a gloss 45° of 80 GU or more, or 80 GU to 100 GU, preferably 85 GU or more, 88 GU or more, 90 GU or more, or 93 GU or more as measured according to ASTM 2457 standard.

Further, the polyethylene biaxially stretched film has excellent stretchability and stretching stability, so it can be stretched at an MD stretching ratio of more than 4 times, or 5 times or more, and a TD stretching ratio of more than 6 times, or 7 times or more.

The polyethylene biaxially stretched film may have a tensile strength in the MD direction of 100 MPa or more, 110

MPa or more, or 120 MPa or more, and 150 MPa or less, and a tensile strength in the TD direction of 180 MPa or more, 190 MPa or more, or 200 MPa or more and 250 MPa or less as measured according to ASTM D 882 standard.

Accordingly, an average of MD tensile strength and TD tensile strength measured according to ASTM D 882 of the biaxially stretched film may be 130 MPa or more, preferably 140 MPa or more, 150 MPa or more, or 160 MPa or more, and 200 MPa or less.

In addition, the polyethylene biaxially stretched film may have a tensile modulus in the MD direction of 600 MPa or more, or 645 MPa or more, and 1000 MPa or less, and a tensile modulus in the TD direction of 800 MPa or more, or 900 MPa or more and 1500 MPa or less.

Accordingly, an average of MD tensile modulus and TD tensile modulus measured according to ASTM D 882 of the biaxially stretched film may be 700 MPa or more, preferably 750 MPa or more, 780 MPa or more, or 794.5 MPa or more, and 1000 MPa or less.

The polyethylene biaxially stretched film may have a tensile elongation in the MD direction of 150% to 250%, or 160% to 230%, and a tensile elongation in the TD direction of 50% to 100%, or 65% to 90% as measured according to ASTM D 882 standard.

The polyethylene biaxially stretched film may have a tear strength in the MD direction of 6 N/mm to 13.1 N/mm, and a tear strength in the TD direction of 1.6 N/mm to 6.7 N/mm as measured according to ASTM 1922 standard.

In addition, the polyethylene biaxially stretched film may have a puncture strength of 300 N/mm or more as measured according to EN 14477 standard. Preferably, the puncture strength may be 320 N/mm or more, 340 N/mm or more, or 357 N/mm or more, and 400 N/mm or less.

In the present disclosure, the physical properties of the biaxially stretched film may be measured according to the above-described standards, and a specific method is as described in Test Example 3 to be described later.

In the present disclosure, the first ethylene-alpha olefin copolymer, which has excellent flowability to impart stretchability, is blended with the second ethylene-alpha olefin copolymer, which has excellent mechanical properties, thereby adjusting the balance between mechanical properties and elongation. Accordingly, a biaxially oriented film having high shrinkage resistance, printability and transparency can be stably manufactured while maintaining excellent mechanical properties, productivity, and stretching stability.

[ADVANTAGEOUS EFFECTS]

The polyethylene according to the present disclosure has an excellent effect of manufacturing a biaxially stretched film having high shrinkage resistance, printability and transparency while maintaining excellent mechanical properties, productivity and stretching stability.

[BRIEF DESCRIPTION OF THE DRAWINGS]

FIG. 1 shows the results of a tensile test performed on sheet-type specimens with a thickness of 1 mm at a tensile rate of 500%/min at room temperature (25 °C) according to ASTM D638 to measure a natural draw ratio (NDR) of the polyethylene compositions of Examples and Comparative Examples, and

FIG. 2 shows the results of a tensile test performed on sheet-type specimens with a thickness of 1 mm at a tensile rate of 1000%/min at 120 °C according to ASTM D638 to measure an elongation at break of the polyethylene compositions of Examples and Comparative Examples.

[DETAILED DESCRIPTION OF THE EMBODIMENTS]

Hereinafter, embodiments of the present invention will be described in more detail in the following examples. However, the following examples are for illustrative purposes only and are not intended to limit the present invention.

**[Examples]**

**<Preparation of metallocene compound>**

**Synthesis Example 1**

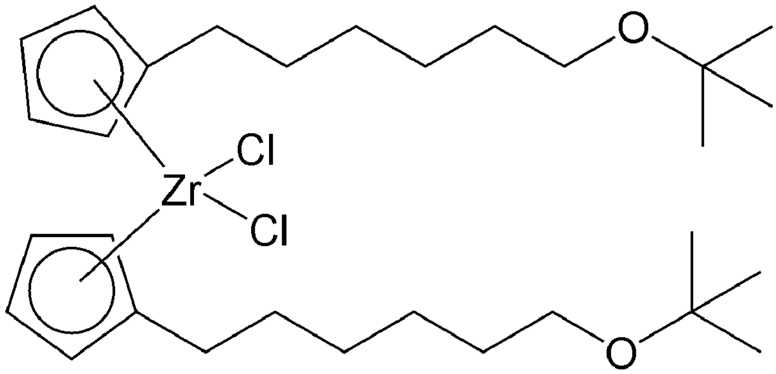

t-butyl-O-$(CH_2)_6$-Cl was prepared by the method shown in Tetrahedron Lett. 2951 (1988) using 6-chlorohexanol, and reacted with $Na(C_5H_5)$ [NaCp] to obtain butyl-O-$(CH_2)_6$-$C_5H_5$ (yield 60%, b.p. 80 °C/0.1 mmHg).

In addition, t-butyl-O-$(CH_2)_6$-$C_5H_5$ was dissolved in tetrahydrofuran (THF) at -78 °C, and n-BuLi was slowly added thereto. Thereafter, it was heated to room temperature and reacted for 8 hours. The lithium salt solution synthesized as described above was slowly added to a suspension solution of $ZrCl_4(THF)_2$ (170 g, 4.50 mmol)/THF(30 mL) at -78 °C, and further reacted for about 6 hours at room temperature. All volatiles were dried under vacuum and the resulting oily liquid material was filtered by adding a hexane solvent. The filtered solution was dried under vacuum, and hexane was added to obtain a precipitate at a low temperature (-20 °C). The obtained precipitate was filtered at a low temperature to obtain [t-butyl-O-$(CH_2)_6$-$C_5H_4]_2ZrCl_2$ compound in the form of a white solid (yield 92%).

$^1$H-NMR(300 MHz, $CDCl_3$): δ 6.28(t, J=2.6 Hz, 2H), 6.19(t, J=2.6 Hz, 2H), 3.31(t, 6.6 Hz, 2H), 2.62(t, J=8 Hz), 1.7 - 1.3(m, 8H), 1.17(s, 9H).

$^{13}$C-NMR($CDCl_3$): δ 135.09, 116.66, 112.28, 72.42, 61.52, 30.66, 30.31, 30.14, 29.18, 27.58, 26.00.

Synthesis Example 2

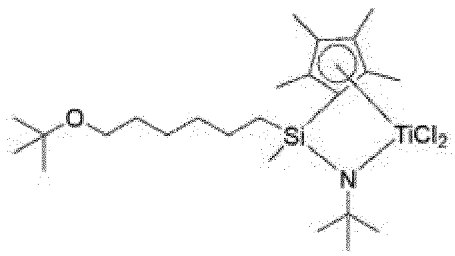

50 g of Mg(s) was added to a 10 L reactor at room temperature, followed by 300 mL of THF. 0.5 g of $I_2$ was added, and the reactor temperature was maintained at 50 °C. After the reactor temperature was stabilized, 250 g of 6-t-butoxyhexyl chloride was added to the reactor at a rate of 5 mL/min using a feeding pump. It was observed that the reactor temperature rose by 4 to 5 °C with the addition of 6-t-butoxyhexylchloride. It was stirred for 12 hours while continuously adding 6-t-butoxyhexylchloride. After reaction for 12 hours, a black reaction solution was obtained. 2 mL of the black solution was taken, and water was added thereto to obtain an organic layer. The organic layer was confirmed to be 6-t-butoxyhexane through $^1$H-NMR. From this, it was confirmed that Grignard reaction was well performed. Thus, 6-t-butoxyhexyl magnesium chloride was synthesized.

500 g of $MeSiCl_3$ and 1 L of THF were added to a reactor, and then the reactor temperature was cooled down to -20 °C. 560 g of the 6-t-butoxyhexyl magnesium chloride synthesized above was added to the reactor at a rate of 5 mL/min using a feeding pump. After completion of the feeding of Grignard reagent, the mixture was stirred for 12 hours while slowly raising the reactor temperature to room temperature. After reaction for 12 hours, it was confirmed that white $MgCl_2$ salt was produced. 4 L of hexane was added thereto and the salt was removed through a labdori to obtain a filtered solution. After the filtered solution was added to the reactor, hexane was removed at 70 °C to obtain a pale yellow liquid. The obtained liquid was confirmed to be methyl(6-t-butoxy hexyl)dichlorosilane through $^1$H-NMR.

$^1$H-NMR(300 MHz, $CDCl_3$): δ 3.3(t, 2H), 1.5(m, 3H), 1.3(m, 5H), 1.2(s, 9H), 1.1(m, 2H), 0.7(s, 3H).

1.2 mol (150 g) of tetramethylcyclopentadiene and 2.4 L of THF were added to the reactor, and then the reactor temperature was cooled down to -20 °C. 480 mL of n-BuLi was added to the reactor at a rate of 5 ml/min using a feeding pump. After n-BuLi was added, the mixture was stirred for 12 hours while slowly raising the reactor temperature to room

temperature. After reaction for 12 hours, an equivalent of methyl(6-t-butoxy hexyl)dichlorosilane (326 g, 350 mL) was rapidly added to the reactor. The mixture was stirred for 12 hours while slowly raising the reactor temperature to room temperature. Then, the reactor temperature was cooled to 0 °C again, and 2 equivalents of t-$BuNH_2$ was added. The mixture was stirred for 12 hours while slowly raising the reactor temperature to room temperature. After reaction for 12 hours, THF was removed. Thereafter, 4 L of hexane was added and the salt was removed through a labdori to obtain a filtered solution. The filtered solution was added to the reactor again, and hexane was removed at 70 °C to obtain a yellow solution. The yellow solution obtained above was confirmed to be methyl(6-t-butoxyhexyl)(tetramethylCpH)t-butylaminosilane through $^1$H-NMR.

$TiCl_3(THF)_3$ (10 mmol) was rapidly added to a dilithium salt of a ligand at -78 °C, which was synthesized from n-BuLi and the ligand of dimethyl(tetramethylCpH)t-butylaminosilane synthesized in THF solution. While slowly heating the reaction solution from -78 °C to room temperature, it was stirred for 12 hours. After stirring for 12 hours, an equivalent of $PbCl_2$ (10 mmol) was added to the reaction solution at room temperature, and then stirred for 12 hours. After stirring for 12 hours, a dark black solution with a blue tinge was obtained. THF was removed from the resulting reaction solution, and then hexane was added to filter the product. Hexane was removed from the filtered solution, and then the product was confirmed to be (tBu-O-$(CH_2)_6$)($CH_3$)Si($C_5(CH_3)_4$)(tBu-N)$TiCl_2$, ([methyl(6-t-buthoxyhexyl)silyl(η5-tetramethylCp)(t-Butylamido)] $TiCl_2$), through $^1$H-NMR.

$^1$H-NMR(300 MHz, $CDCl_3$): δ 3.3(s, 4H), 2.2(s, 6H), 2.1(s, 6H), 1.8 ~ 0.8(m), 1.4(s, 9H), 1.2(s, 9H), 0.7(s, 3H).

Synthesis Example 3

(1) Preparation of ligand A

A 1-benzothiophene solution was prepared by dissolving 4.0 g (30 mmol) of 1-benzothiophene in THF. Then, 14 mL (36 mmol, 2.5 M in hexane) of an n-BuLi solution and 1.3 g (15 mmol) of CuCN were added to the 1-benzothiophene solution. Then, 3.6 g (30 mmol) of tigloyl chloride was slowly added to the above solution at -80 °C, and the resulting solution was stirred at room temperature for about 10 hours. Thereafter, 10% HCl was poured into the above solution to quench the reaction, and the organic layer was separated with dichloromethane to obtain (2E)-1-(1-benzothien-2-yl)-2-methyl-2-buten-1-one in the form of a beige solid.

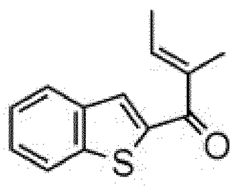

$^1$H NMR($CDCl_3$): 7.85-7.82(m, 2H), 7.75(m, 1H), 7.44-7.34(m, 2H), 6.68(m, 1H), 1.99(m, 3H), 1.92(m, 3H)

34 mL of sulfuric acid was slowly added to the solution in which 5.0 g (22 mmol) of (2E)-1-(1-benzothien-2-yl)-2-methyl-2-buten-1-one prepared above was dissolved in 5 mL of chlorobenzene while vigorous stirring. Then, the solution was stirred at room temperature for about 1 hour. Thereafter, ice water was poured into the solution, the organic layer was separated with an ether solvent, and 4.5 g of 1,2-dimethyl-1,2-dihydro-3H-benzo[b]cyclopenta[d]thiophen-3-one was obtained in the form of a yellow solid (91% yield).

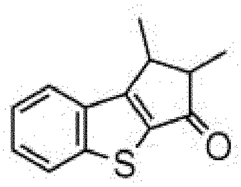

$^1$H NMR($CDCl_3$): 7.95-7.91(m, 2H), 7.51-7.45(m, 2H), 3.20(m, 1H), 2.63(m, 1H), 1.59(d, 3H), 1.39(d, 3H)

570 mg (15 mmol) of $NaBH_4$ was added to the solution in which 2.0 g (9.2 mmol) of 1,2-dimethyl-1,2-dihydro-3H-benzo[b]cyclopenta[d]thiophen-3-one was dissolved in a mixed solvent of 20 mL of THF and 10 mL of methanol at 0 °C. Then, the solution was stirred at room temperature for about 2 hours. Thereafter, HCl was added to the solution to adjust the pH to 1, and the organic layer was separated with an ether solvent to obtain an alcohol intermediate.

A solution was prepared by dissolving the alcohol intermediate in toluene. Then, 190 mg (1.0 mmol) of p-toluenesulfonic acid was added to the solution, and refluxed for about 10 minutes. The obtained reaction mixture was separated by column chromatography to obtain 1.8 g (9.0 mmol, 98% yield) of 1,2-dimethyl-3H-benzo[b] cyclopenta[d]thiophene (ligand A) in the form of an orange-brown liquid.

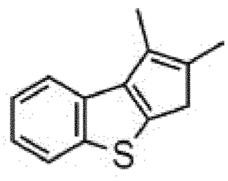

$^1H$ NMR($CDCl_3$): 7.81(d, 1H), 7.70(d, 1H), 7.33(t, 1H), 7.19(t, 1H), 6.46(s, 1H), 3.35(q, 1H), 2.14(s, 3H), 1.14(d, 3H)

(2) Preparation of ligand B

13 mL (120 mmol) of t-butylamine and 20 mL of an ether solvent were added to a 250 mL schlenk flask, and 16 g (60 mmol) of (6-tert-butoxyhexyl)dichloro(methyl)silane and 40 mL of an ether solvent were added to another 250 mL schlenk flask to prepare a t-butylamine solution and a (6-tert-butoxyhexyl)dichloro(methyl)silane solution, respectively. Then, the t-butylamine solution was cooled to -78 °C, and the (6-tert-butoxyhexyl)dichloro(methyl)silane solution was slowly injected into the cooled solution, followed by stirring at room temperature for about 2 hours. The resulting white suspension was filtered to obtain 1-(6-(tert-butoxy)hexyl)-N-(tert-butyl)-1-chloro-1-methylsilaneamine (ligand B) in the form of an ivory liquid.

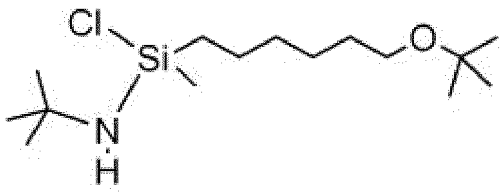

$^1H$ NMR($CDCl_3$): 3.29(t, 2H), 1.52-1.29(m, 10H), 1.20(s, 9H), 1.16(s, 9H), 0.40(s, 3H)

(3) Cross-linking of ligands A and B

1.7 g (8.6 mmol) of 1,2-dimethyl-3H-benzo[b]cyclopenta[d]thiophene (ligand A) was added in a 250 mL schlenk flask, followed by adding 30 mL of THF to prepare a ligand A solution. After the ligand A solution was cooled to -78 °C, 3.6 mL (9.1 mmol, 2.5 M in hexane) of an n-BuLi solution was added to the ligand A solution. Then, the mixture was stirred at room temperature overnight to obtain a purple-brown solution. The solvent of the purple-brown solution was replaced with toluene and a solution in which 39 mg (0.43 mmol) of CuCN was dispersed in 2 mL of THF was injected thereto to prepare a solution A.

Meanwhile, a solution B prepared by injecting 1-(6-(tert-butoxy)hexyl)-N-(tert-butyl)-1-chloro-1-methylsilaneamine (ligand B) and toluene into a 250 mL schlenk flask was cooled to -78 °C. The solution A prepared above was slowly injected into the cooled solution B. Then, the mixture of solutions A and B was stirred at room temperature overnight. Thereafter, the resulting solid was removed by filtration to obtain 4.2 g (>99% yield) of 1-(6-(tert-butoxy)hexyl)-N-(tert-butyl)-1-(1,2-dimethyl-3H-benzo[b]cyclopenta[d]thiophen-3-yl)-1-methylsilaneamine (cross-linked product of ligands A and B) in the form of a brown viscous liquid.

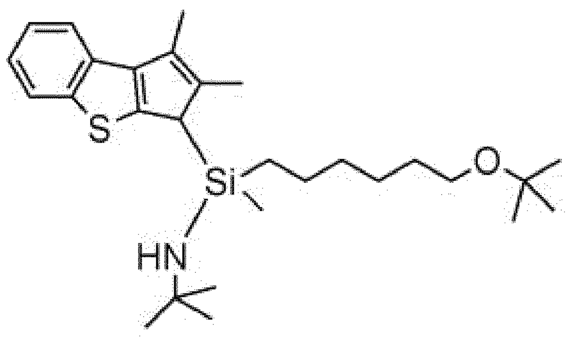

In order to confirm the structure of the cross-linked product of ligands A and B, the cross-linked product was lithiated at room temperature, and then an H-NMR spectrum was obtained using a sample dissolved in a small amount of pyridine-D5 and $CDCl_3$.

$^1$H NMR(pyridine-D5 $CDCl_3$): 7.81(d, 1H), 7.67(d, 1H), 7.82-7.08(m, 2H), 3.59(t, 2H), 3.15(s, 6H), 2.23-1.73(m, 10H), 2.15(s, 9H), 1.91(s, 9H), 1.68(s, 3H)

(4) Preparation of transition metal compound

4.2 g (8.6 mmol) of 1-(6-(tert-butoxy)hexyl)-N-(tert-butyl)-1-(1,2-dimethyl-3H-benzo[b]cyclopenta[d]thiophene-3-yl)-1-methylsilaneamine (cross-linked product of ligands A and B) was added in a 250 mL schlenk flask, and 14 mL of toluene and 1.7 mL of n-hexane were added to the flask to dissolve the cross-linked product. The solution was cooled to -78 °C, and then 7.3 mL (18 mmol, 2.5 M in hexane) of an n-BuLi solution was injected into the cooled solution. Thereafter, the solution was stirred at room temperature for about 12 hours. Then, 5.3 mL (38 mmol) of trimethylamine was added to the solution, followed by stirring at about 40 °C for about 3 hours to prepare a solution C.

Meanwhile, 2.3 g (8.6 mmol) of $TiCl_4(THF)_2$ and 10 mL of toluene were added to a separately prepared 250 mL schlenk flask to prepare a solution D in which $TiCl_4(THF)_2$ was dispersed in toluene. The solution C prepared before the solution D was slowly injected at -78 °C, and the mixture of solutions C and D was stirred at room temperature for about 12 hours. Thereafter, the solution was depressurized to remove the solvent, and the resulting solute was dissolved in toluene. Then, the solid not dissolved in toluene was removed by filtration, and the solvent was removed from the filtered solution to obtain 4.2 g (83% yield) of a transition metal compound in the form of a brown solid.

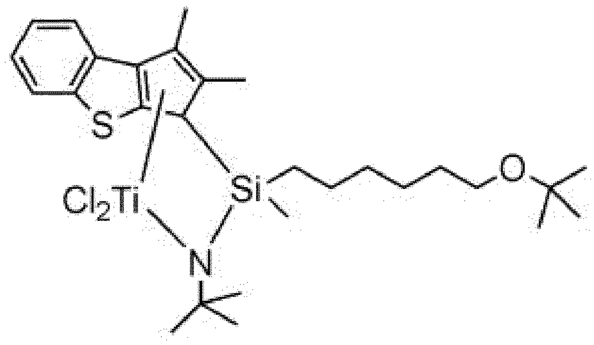

$^1$H NMR($CDCl_3$): 8.01(d, 1H), 7.73(d, 1H), 7.45-7.40(m, 2H), 3.33(t, 2H), 2.71(s, 3H), 2.33(d, 3H), 1.38(s, 9H), 1.18(s, 9H), 1.80-0.79(m, 10H), 0.79(d, 3H)

**Synthesis Example 4**

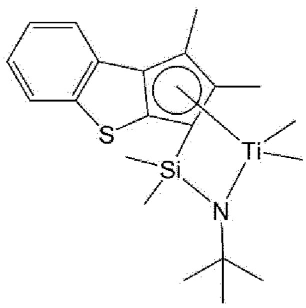

(1) Preparation of ligand compound: Synthesis of N-tert-butyl-1-(1,2-dimethyl-3H-benzo[b]cyclopenta[d]thiophen-3-yl)-1,1-dimethylsilanamine

4.65 g (15.88 mmol) of the compound of Chemical Formula 3 was added to a 100 mL Schlenk flask, and then 80 mL of THF was added thereto. After adding $tBuNH_2$ (4eq, 6.68 mL) at room temperature, the mixture was reacted at room temperature for 3 days. After the reaction, THF was removed, and the mixture was filtered with hexane. After drying the solvent, 4.50 g (yield: 86%) of a yellow liquid was obtained.

$^1$H-NMR(500 MHz, $CDCl_3$): $\delta$ 7.99(d, 1H), 7.83(d, 1H), 7.35(dd, 1H), 7.24(dd, 1H), 3.49(s, 1H), 2.37(s, 3H),

2.17(s, 3H), 1.27(s, 9H), 0.19(s, 3H), - 0.17(s, 3H).

(2) Preparation of transition metal compound

The ligand compound (1.06 g, 3.22 mmol/1.0eq) and MTBE 16.0 mL (0.2 M) were added to a 50 mL schlenk flask and stirred first. At -40 °C, n-BuLi (2.64 mL, 6.60 mmol/2.05eq, 2.5M in THF) was added, and reacted overnight at room temperature. Thereafter, MeMgBr (2.68 mL, 8.05 mmol/2.5eq, 3.0M in diethyl ether) was slowly added dropwise at -40 °C, and then $TiCl_4$(2.68 mL, 3.22 mmol/1.0eq, 1.0M in toluene) was added thereto at room temperature, followed by reacting overnight. The reaction mixture was then filtered through celite using hexane. After drying the solvent, 1.07 g (yield: 82%) of a brown solid was obtained.

$^1$H-NMR(500 MHz, $CDCl_3$): δ 7.99(d, 1H), 7.68(d, 1H), 7.40(dd, 1H), 7.30(dd, 1H), 3.22(s, 1H), 2.67(s, 3H), 2.05(s, 3H), 1.54(s, 9H), 0.58(s, 3H), 0.57(s, 3H), 0.40(s, 3H), -0.45(s, 3H).

**<Preparation of supported catalyst>**

**Preparation Example 1: Preparation of hybrid supported metallocene catalyst 1**

5.0 kg of a toluene solution was added to a 20 L sus high-pressure reactor, and the reactor temperature was maintained at 40 °C. 1,000 g of silica (manufactured by Grace Davison, SYLOPOL 948) dehydrated by applying vacuum at a temperature of 600 °C for 12 hours was added to the reactor and sufficiently dispersed, and then 80 g of the metallocene compound of Synthesis Example 1 was dissolved in toluene and added thereto, followed by stirring at 200 rpm at 40 °C for 2 hours to react. Thereafter, stirring was stopped, settling was performed for 30 minutes, and the reaction solution was decanted.

2.5 kg of toluene was added to the reactor, and 9.4 kg of a 10 wt% methylaluminoxane (MAO)/toluene solution was added thereto, followed by stirring at 200 rpm at 40 °C for 12 hours. After the reaction, stirring was stopped, settling was performed for 30 minutes, and the reaction solution was decanted. After adding 3.0 kg of toluene and stirring for 10 minutes, stirring was stopped and settling was performed for 30 minutes, and the toluene solution was decanted.

3.0 kg of toluene was added to the reactor, and then 314 mL of the 29.2 wt% metallocene compound of Synthesis Example 2/toluene solution was added to the reactor, followed by stirring at 200 rpm at 40 °C for 2 hours to react. At this time, the molar ratio of the first metallocene compound and the second metallocene compound was 1:5. After the reactor temperature was lowered to room temperature, stirring was stopped, settling was performed for 30 minutes, and the reaction solution was decanted.

After adding 2.0 kg of toluene and stirring for 10 minutes, stirring was stopped and settling was performed for 30 minutes, and the reaction solution was decanted.

3.0 kg of hexane was added to the reactor, the hexane slurry was transferred to a filter dryer, and the hexane solution was filtered. It was dried under reduced pressure at 40 °C for 4 hours to prepare 910g-$SiO_2$ hybrid supported catalyst 1.

**Preparation Example 2: Preparation of hybrid supported metallocene catalyst 2**

3.0 kg of a toluene solution was added to a 20 L sus high-pressure reactor, and the reactor temperature was maintained at 40 °C. 500 g of silica (manufactured by Grace Davison, SP2212) dehydrated by applying vacuum at a temperature of 600 °C for 12 hours was added to the reactor and sufficiently dispersed, and then 2.78 kg of 10 wt% methylaluminoxane (MAO)/toluene solution was added thereto, followed by stirring at 200 rpm at 80 °C for 15 hours to react.

After lowering the temperature of the reactor to 40 °C, 200 g of the first metallocene compound/toluene solution (7.8 wt% in toluene) prepared in Synthesis Example 1 was added to the reactor and stirred at 200 rpm for 1 hour. Subsequently, 250 g of the second metallocene compound (b)/toluene solution (7.8 wt% in toluene) prepared in Synthesis Example 3 was added to the reactor and stirred at 200 rpm for 1 hour (molar ratio of first metallocene compound: second metallocene compound=1: 1.3).

70 g of a cocatalyst (anilinium tetrakis(pentafluorophenyl)borate) was diluted in toluene, and then added to the reactor, followed by stirring at 200 rpm for 15 hours or more. After lowering the temperature of the reactor to room temperature, stirring was stopped, settling was performed for 30 minutes, and the reaction solution was decanted.

The toluene slurry was transferred to a filter dryer and filtered. After adding 3.0 kg of toluene and stirring for 10 minutes, stirring was stopped and filtration was performed. 3.0 kg of hexane was added to the reactor and stirred for 10 minutes, then stirring was stopped and filtration was performed. It was dried under reduced pressure at 50 °C for 4 hours to prepare a 500 g-$SiO_2$ supported catalyst.

**<Preparation of ethylene-alpha olefin copolymer>**

**Preparation Example 3: Preparation of ethylene/1-hexene copolymer (PE-a)**

An ethylene/1-hexene copolymer (PE-a) was slurry polymerized in the presence of the supported hybrid catalyst 1 prepared in Preparation Example 1.

At this time, the polymerization reactor was an isobutane (i-C4) slurry loop process, a continuous polymerization reactor, and a reactor volume was 140 L with a flow rate of about 7 m/s. Gases (ethylene, hydrogen) required for polymerization and 1-hexene, a comonomer, were constantly and continuously introduced, and the flow rates were adjusted according to target products. At this time, the ethylene input was 31.1 kg/hr, the 1-hexene input was adjusted to 2.5 wt% compared to ethylene, and the hydrogen input was adjusted to 56 ppm compared to ethylene. In addition, the concentrations of all gases and 1-hexene comonomer in Preparation Example 1 were confirmed by on-line gas chromatograph. The supported catalyst was prepared and introduced as an isobutane slurry having a concentration of 4 wt%, the reactor pressure was maintained at about 40 bar, and the polymerization temperature was about 80 °C.

**Preparation Example 4: Preparation of ethylene/1-hexene copolymer (PE-b)**

An ethylene/1-hexene copolymer was prepared by a monomodal polymerization process.

Specifically, an ethylene/1-hexene copolymer (PE-b) was obtained using the hybrid supported metallocene catalyst 2 prepared in Preparation Example 2 in one loop-type reactor (polymerization temperature: 93 °C, polymerization pressure: 7.7 kgf/cm$^2$) with a hexane slurry stirred tank process polymerization reactor under the conditions of 10.0 kg/hr of ethylene input, 6.3 ml/min of 1-hexene input as a comonomer, and 1.73 g/hr of hydrogen input.

The catalytic activity was obtained by measuring the weight of the catalyst used in the polymerization reaction and the weight of the polymer prepared from the polymerization reaction, and then calculating a weight ratio of the weight of the prepared polymer to the weight of the used catalyst, and confirmed to be 9.9 kgPE/gCat.hr.

**Preparation Example 5: Preparation of ethylene/1-octene copolymer (PE-c)**

A 1.5 L continuous process reactor was preheated at 120 °C while adding 5 kg/h of a hexane solvent and 0.31 kg/h of 1-octene. Triisobutylaluminum (Tibal, 0.045 mmol/min), the transition metal compound obtained in Synthesis Example 4, and dimethylanilinium tetrakis(pentafluorophenyl)borate cocatalyst (2.6 μmol/min) were simultaneously added to the reactor. Subsequently, ethylene (0.87 kg/h) and hydrogen gas (10 cc/min) were introduced into the reactor and maintained at 160.0 °C for more than 60 minutes in a continuous process at a pressure of 89 bar to carry out a copolymerization reaction to obtain an ethylene/1-octene copolymer (PE-d).

**Preparation Example 6: Preparation of ethylene/1-butene copolymer (PE-d)**

As the ethylene/1-butene copolymer (PE-d), a commercially available product (LG Chem ME1000, Ziegler-Natta catalyst) was used.

**Preparation Example 7: Preparation of ethylene/1-hexene copolymer (PE-e)**

As the ethylene/1-hexene copolymer (PE-e), a commercially available product (LG Chem HP1018, metallocene catalyst) was used.

**<Test Example 1: Evaluation of physical properties of polyethylene>**

The physical properties of the ethylene-alpha olefin copolymers prepared in Preparation Examples 3 to 5 were measured by the method described below and are shown in Table 1.

**(1) Density**

The density (g/cm$^3$) was measured using a density gradient column according to ASTM D 1505 (American Society for Testing and Materials).

**(2) Melt index**

The melt index ($MI_{2.16}$) was measured under a load of 2.16 kg at 190 °C according to ASTM D 1238 (Condition E,

190 °C, 2.16 kg) of the American Society for Testing and Materials (measurement equipment: MI-4 manufactured by Gottfert), and expressed as the weight (g) of the polymer melted for 10 minutes.

**(3) Number average molecular weight (Mn), weight average molecular weight (Mw) and molecular weight distribution (Mw/Mn)**

Regarding the ethylene-alpha olefin copolymers prepared in Preparation Examples 1 to 4, the molecular weight distribution (Mw/Mn, PDI, polydispersity index) was calculated by measuring a weight average molecular weight (Mw, g/mol) and a number average molecular weight (Mn, g/mol) using gel permeation chromatography (GPC, manufactured by Water) according to ASTM D 6474 (American Society for Testing and Materials), and then dividing the weight average molecular weight by the number average molecular weight.

Specifically, PL-GPC220 manufactured by Waters was used as the gel permeation chromatography (GPC) instrument, and a Polymer Laboratories PLgel MIX-B 300 mm length column was used. An evaluation temperature was 160 °C, and 1,2,4-trichlorobenzene was used for a solvent at a flow rate of 1 mL/min. Each ethylene-alpha olefin copolymer sample prepared in Preparation Examples 1 to 2 was pretreated by dissolving in 1,2,4-trichlorobenzene containing 0.0125% of BHT at 160 °C for 3 hours using a GPC analyzer (PL-GP220), and the sample with a concentration of 32 mg/10 mL was supplied in an amount of 200 μL. Mw and Mn were obtained using a calibration curve formed using a polystyrene standard. 9 kinds of the polystyrene standard were used with the molecular weight of 2000 g/mol, 10000 g/mol, 30000 g/mol, 70000 g/mol, 200000 g/mol, 700000 g/mol, 2000000 g/mol, 4000000 g/mol, and 10000000 g/mol.

[Table 1]

| | Comonomer | Density (g/cm$^3$) | $MI_{2.16kg}$ (g/10min) | Mn (g/mol) | Mw (g/mol) | Mw/Mn |
|---|---|---|---|---|---|---|
| Pre. Ex. 3(PE-a) | 1-Hexene | 0.941 | 0.6 | 28,000 | 114,000 | 4.1 |
| Pre. Ex. 4(PE-b) | 1-Hexene | 0.948 | 0.2 | 15,000 | 200,000 | 13.1 |
| Pre. Ex. 5(PE-c) | 1-Octene | 0.900 | 6.0 | 30,000 | 68,000 | 2.3 |

**<Preparation of polyethylene composition>**

**Examples 1 to 3 and Comparative Examples 1 to 3**

Polyethylene compositions of Examples 1 to 3 and Comparative Examples 1 to 3 were prepared using the above-described ethylene-alpha olefin copolymers of Preparation Examples 3 to 7, respectively, with the compositions shown in Table 2 below.

Specifically, a polyethylene composition was prepared by extruding and granulating with a hopper of 18 rpm and a screw of 350 rpm at 220 °C using a twin extruder (extruder: TEK30MHS from SMPLATEK, L/D ratio: 40, die diameter: 4 mm).

**<Test Example 2: Evaluation of physical properties of polyethylene composition>**

Physical properties of the polyethylene compositions prepared in Examples 1 to 3 and Comparative Examples 1 to 3 were measured by the method described below and are shown in Table 2.

First, the melt index ($MI_{2.16}$), density, weight average molecular weight (Mw, g/mol), number average molecular weight (Mn, g/mol) and molecular weight distribution (Mw/Mn, PDI) of the polyethylene compositions were measured in the same manner as in Test Example 1 above.

**(1) Melting temperature (Tm), crystallization temperature (Tc) and crystallinity (%)**

The melting temperature (Tm), crystallization temperature (Tc) and crystallinity (Xc) of the polyethylene compositions of Examples 1 to 3 and Comparative Examples 1 to 3 were measured using a differential scanning calorimeter (DSC, device name: DSC Q20, manufacturer: TA instrument).

Specifically, the polyethylene composition was heated to 180 °C at 10 °C/min (Cycle 1), isothermal at 180 °C for 5 minutes, cooled to 0 °C at 10 °C/min, isothermal at 30 °C for 5 minutes, and then heated again to 180 °C at 10 °C/min (Cycle 2). In the DSC curve obtained above, the temperature at the maximum point of the endothermic peak was measured as the melting temperature (Tm, °C), and the temperature at the maximum point of the exothermic peak was measured as the crystallization temperature (Tc, °C). At this time, the melting temperature (Tm) and the crystallization temperature (Tc) were shown as the results measured in Cycle 2 in which the second temperature rises and falls.

In addition, the heat of fusion ΔHm was obtained by calculating the area of the melting peak in Cycle 2 in which the second temperature rises, and the crystallinity (Xc, %) was calculated by dividing ΔHm by H0m = 293.6 J/g, which is the theoretical value when the crystallinity is 100%.

### (2) Tie molecule fraction (wt%)

The tie molecule fraction of the polyethylene compositions of Examples and Comparative Examples was calculated from the above-mentioned Equations 1 to 4, according to the method described in U.S. Patent No. 10775287.

### (3) Natural draw ratio (NDR, %), 120 °C elongation at break (%), 120 °C yield strength (MPa), and 120 °C 1% modulus (MPa)

First, each composition of Examples and Comparative Examples was compression molded at a temperature of 180 °C and a pressure of 4500 lbf for 15 minutes to produce a sheet with a thickness of 1 mm, and then a tensile test specimen was prepared according to ASTM D 638 standard.

A tensile test was performed on the test specimen at room temperature (25 °C) at a tensile rate of 500%/min according to ASTM D638, and the results of the tensile test are shown in FIG. 1. From these tensile test results, the natural draw ratio (NDR) was calculated as the elongation up to the strain hardening point of the tensile curve.

In addition, a high-temperature tensile test was performed on the tensile test specimen according to ASTM D638 under the conditions of a tensile rate of 1000%/min at a temperature of 120 °C using a UTM equipment (universal tensile test equipment) equipped with an oven. The results of the high-temperature tensile test are shown in FIG. 2. From these tensile test results, the elongation at break at 120 °C was calculated as the elongation at break of the specimen.

Additionally, the 120 °C yield strength, defined as the tensile strength at the transition point from the elastic region to the plastic region, was calculated from the tensile curve derived from the high-temperature tensile test results in FIG. 2, and the 1% modulus was obtained by calculating the tensile modulus from the starting point of the tensile curve to an elongation of 1%.

[Table 2]

| | Example 1 | Example 2 | Example 3 | Comparati ve Example 1 | Comparati ve Example 2 | Comparati ve Example 3 |
|---|---|---|---|---|---|---|
| Composition | PE-a(70wt%) + PE-c(30wt%) | PE-a(80wt%) + PE-c(20wt%) | PE-b(70wt%) + PE-c(30wt%) | PE-a(50wt%) + PE-c(50wt%) | PE-d(70wt%) + PE-c(30wt%) | PE-e(100wt%) |
| Density ($g/cm^3$) | 0.931 | 0.935 | 0.935 | 0.924 | 0.940 | 0.918 |
| $MI_{2.16kg}$ (g/10min) | 1.1 | 0.9 | 0.4 | 1.8 | 1.6 | 1.0 |
| Mn (g/mol) | 31,000 | 30,000 | 19,000 | 30,000 | 8,900 | 39,000 |
| Mw (g/mol) | 106,000 | 111,000 | 158,000 | 93,000 | 115,000 | 108,000 |
| Tm (°C) | 127.9 | 128.4 | 128.0 | 126.6 | 130.3 | 120.2 |
| Tc (°C) | 113.7 | 113.4 | 113.9 | 113.3 | 116.1 | 104.9 |
| Xc (%) | 40.8 | 43.9 | 45.2 | 36.9 | 51.8 | 34.6 |
| Mw/Mn | 3.4 | 3.7 | 8.3 | 3.1 | 12.9 | 2.7 |
| Tie Molecule (wt%) | 5.24 | 5.27 | 5.76 | 3.90 | 2.91 | 14.22 |
| NDR (%) | 670 | 661 | 725 | 592 | 523 | 350 |
| Elongation at break (120°C; %) | 3350 | 3667 | 3931 | 2857 | 2250 | 1045 |

(continued)

| | Example 1 | Example 2 | Example 3 | Comparati ve Example 1 | Comparati ve Example 2 | Comparati ve Example 3 |
|---|---|---|---|---|---|---|
| Yield strength (120°C; MPa) | 4.5 | 4.6 | 4.6 | 2.6 | 4.4 | 0.1 |
| 1% modulus (120°C; MPa) | 4.4 | 4.4 | 4.3 | 2.6 | 3.8 | 0.1 |

**<Test Example 3: Preparation of biaxially stretched film and evaluation of physical properties>**

After preparing a biaxially stretched film by the following method using the polyethylene compositions prepared in Examples 1 to 3 and Comparative Examples 1 to 3, physical properties thereof were measured and shown in Table 3.

**Preparation of biaxially stretched film**

- a polyethylene composition sheet having a thickness of 0.75 mm was prepared using a lab extruder line manufactured from Bruckner (L/D ratio: 42, Screw diameter: 25 mm, Melt/T-Die temperature: 220 °C)
- the polyethylene composition sheet with dimensions of 90 mm x 90 mm in length and width was biaxially stretched using KARO 5.0 equipment
- Perform sequential stretching (MD→TD) after preheating for 80 seconds under the following conditions (Example 1: preheating and stretching at 120 °C, Examples 2: preheating and stretching at 125 °C, Examples 3: preheating and stretching at 122 °C, Comparative Example 1: preheating and stretching at 115 °C, Comparative Example 2: preheating and stretching at 125 °C, Comparative Example 3: Stretching was attempted under the same conditions as Comparative Example 2, but it was determined that stretching was not possible.).

**Evaluation of physical properties of biaxially stretched film**

- Haze (%): Measured according to ASTM 1003 standard
- Gloss 45°: Measured according to ASTM 2457 standard
- Tensile strength (MPa), tensile modulus (MPa) and tensile elongation (%): Measured in MD/TD directions according to ASTM D 882 standard
- Tear strength (N/mm): Measured in MD/TD directions according to ASTM 1922 standard
- Shrinkage (%): Length change was measured after shrinkage at 100 °C or 120 °C for 7 minutes according to ASTM D 1204 standard. Specifically, the shrinkage (%) was measured as [(1 - length after shrinkage)/length before shrinkage] * 100.
- Puncture strength (N/mm): Measured according to EN 14477 standard

[Table 3]

| | Ex. 1 | Ex. 2 | Ex. 3 | Comp. Ex. 1 | Comp. Ex. 2 | Comp. Ex. 3 |
|---|---|---|---|---|---|---|
| Maximum stretching ratio (MD*TD) | 5*8 | 5*8 | 5*8 | 4*6 | 4*6 | Stretching was not possible |
| Haze (%) | 1.6 | 1.7 | 1.9 | 2.0 | 9.5 | - |
| Gloss (45°) | 94 | 94 | 93 | 90 | 61 | - |

(continued)

| | | Ex. 1 | Ex. 2 | Ex. 3 | Comp. Ex. 1 | Comp. Ex. 2 | Comp. Ex. 3 |
|---|---|---|---|---|---|---|---|
| Tensile strength (Mpa) | MD | 130 | 134 | 123 | 90 | 62 | - |
| | TD | 203 | 200 | 203 | 134 | 102 | - |
| | Average of MD, TD | 166.5 | 167 | 163 | 112 | 82 | - |
| Tensile modulus (Mpa) | MD | 645 | 770 | 653 | 308 | 657 | - |
| | TD | 944 | 1007 | 940 | 383 | 689 | - |
| | Average of MD, TD | 794.5 | 888.5 | 796.5 | 345.5 | 673 | - |
| Tensile elongation (%) | MD | 220 | 223 | 164 | 267 | 329 | - |
| | TD | 87 | 86 | 65 | 131 | 155 | - |
| | Average of MD, TD | 153.5 | 154.5 | 114.5 | 199 | 242 | - |
| Tear strength (N/mm) | MD | 13.1 | 11.1 | 6.5 | 51.5 | 15.4 | - |
| | TD | 6.4 | 3.7 | 1.6 | 26.8 | 7.0 | - |
| | Average of MD, TD | 9.75 | 7.4 | 4.05 | 39.15 | 7.7 | - |
| Shrinkage (@100, %) | MD | 0.8 | 0.8 | 0.8 | 2.5 | 0.8 | - |
| | TD | 5.0 | 4.2 | 2.9 | 10.0 | 2.1 | - |
| | MD+TD | 5.8 | 5.0 | 3.7 | 12.5 | 2.9 | - |
| Shrinkage (@120, %) | MD | 5.0 | 4.6 | 7.9 | 9.9 | 1.7 | - |
| | TD | 15.8 | 14.2 | 21.3 | 33.3 | 7.1 | - |
| | MD+TD | 20.8 | 18.8 | 29.2 | 43.2 | 8.8 | - |
| Puncture strength (N/mm) | | 357.0 | 388.3 | 362.0 | 269.8 | 211.4 | - |

According to the results of Table 2 and Table 3, it was confirmed that the compositions of Examples meeting the predetermined tie molecule fraction and NDR had excellent stretchability and stretching stability when manufactured as a biaxially stretched film, and exhibited excellent mechanical properties compared to Comparative Examples.

## Claims

**1.** A polyethylene composition comprising at least one ethylene-alpha olefin copolymer,

wherein a tie molecule fraction derived from crystallinity and crystal structure analysis results is 4.5 to 7.0 wt%, and
a natural draw ratio (NDR) is 600% or more, as measured by performing a tensile test on a sheet-type specimen with a thickness of 1 mm at a tensile rate of 500%/min according to ASTM D638.

**2.** The polyethylene composition of Claim 1,
wherein the polyethylene composition comprises

(a) a first ethylene-alpha olefin copolymer having a density of 0.930 g/cm$^3$ to 0.960 g/cm$^3$ and a melt index ($MI_{2.16}$, 190 °C, 2.16 kg load) of 0.2 g/10min to 2.0 g/10min; and
(b) a second ethylene-alpha olefin copolymer having a density of 0.870 g/cm$^3$ to 0.920 g/cm$^3$ and a melt index ($MI_{2.16}$, 190 °C, 2.16 kg load) of 3.0 g/10min to 10.0 g/10min.

**3.** The polyethylene composition of Claim 2,

wherein the first ethylene-alpha olefin copolymer (a) is included in an amount of 60 wt% or more and 90 wt% or less, and
the second ethylene-alpha olefin copolymer (b) is included in an amount of 10 wt% or more and 40 wt% or less.

**4.** The polyethylene composition of Claim 1,

wherein a density measured according to ASTM D 1505 is 0.925 g/$cm^3$ or more and 0.939 g/$cm^3$ or less, and MI (190 °C, 2.16 kg) measured according to ASTM D 1238 is 0.3 g/10 min or more and 1.5 g/10 min or less.

**5.** The polyethylene composition of Claim 1,

wherein a number average molecular weight (Mn) is 15,000 g/mol or more,
a weight average molecular weight (Mw) is 100,000 g/mol or more, and Mw/Mn is 10.0 or less.

**6.** The polyethylene composition of Claim 1,

wherein a melting point (Tm) is 127 °C or more and 130 °C or less,
a crystallization temperature (Tc) is 112 °C or more and 115 °C or less, and
a crystallinity (Xc) is 37% or more and 50% or less.

**7.** The polyethylene composition of Claim 2,

wherein the first ethylene-alpha olefin copolymer (a) has
a number average molecular weight (Mn) of 12,000 g/mol or more and 50,000 g/mol or less,
a weight average molecular weight (Mw) of 100,000 g/mol or more and 250,000 g/mol or less, and
a molecular weight distribution (Mw/Mn) of 3.0 or more and 20.0 or less.

**8.** The polyethylene composition of Claim 2,
wherein the first ethylene-alpha olefin copolymer (a) is an ethylene/1-hexene copolymer.

**9.** The polyethylene composition of Claim 2,

wherein the second ethylene-alpha olefin copolymer (b) has
a number average molecular weight (Mn) of 20,000 g/mol or more and 50,000 g/mol or less,
a weight average molecular weight (Mw) of 50,000 g/mol or more and 100,000 g/mol or less, and
a molecular weight distribution (Mw/Mn) of 2.0 or more and 4.0 or less.

**10.** The polyethylene composition of Claim 2,
wherein the second ethylene-alpha olefin copolymer (b) is an ethylene/1-octene copolymer.

**11.** The polyethylene composition of Claim 1,
wherein an elongation at break is 3000% or more, as measured by performing a tensile test on a sheet-type specimen with a thickness of 1 mm at a tensile rate of 1000%/min at 120 °C according to ASTM D638.

**12.** The polyethylene composition of Claim 11,
wherein a yield strength at 120°C is 4.0 MPa or more, and a 1% modulus is 4.0 MPa or more, as calculated from the tensile test results

**13.** A biaxially stretched film comprising the polyethylene composition of Claim 1.

**14.** The biaxially stretched film of Claim 13,
wherein the biaxially stretched film is stretched at an MD stretching ratio of more than 4 times, and a TD stretching ratio of more than 6 times.

**15.** The biaxially stretched film of Claim 13,
wherein a haze is less than 2.0% and a gloss 45° is 80 GU or more.

**16.** The biaxially stretched film of Claim 13, wherein an average of MD tensile strength and TD tensile strength measured according to ASTM D 882 is 130 MPa or more.

【FIG. 1】

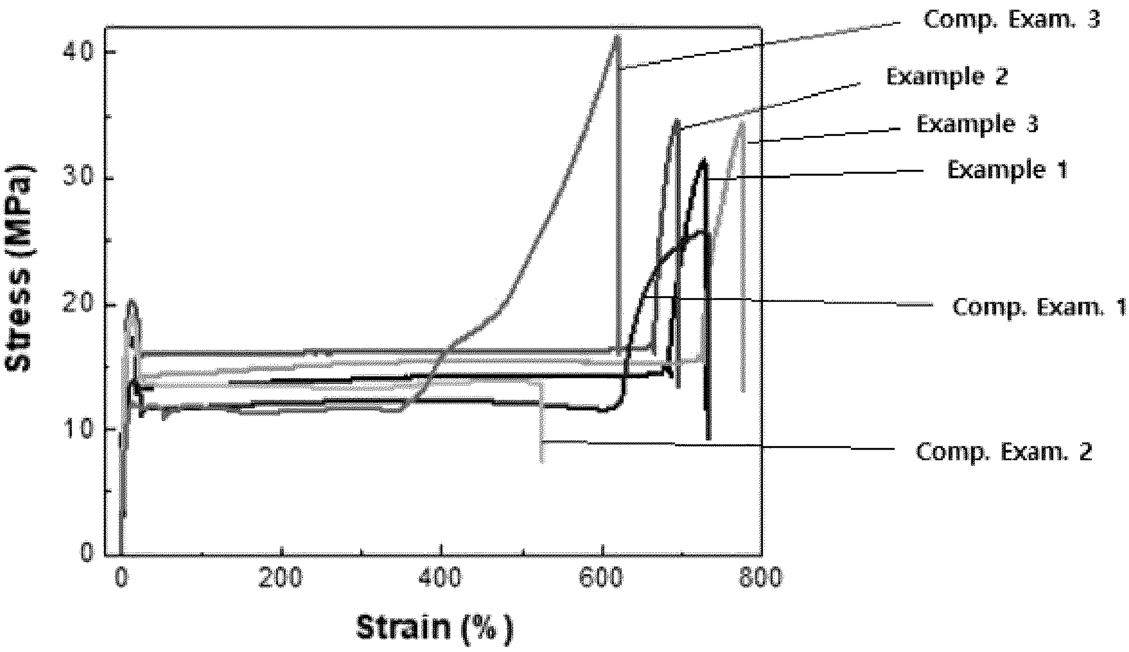
Comp. Exam. 3
Example 2
Example 3
Example 1
Comp. Exam. 1
Comp. Exam. 2
Stress (MPa)
0
10
20
30
40
0
200
400
600
800
Strain (%)

【FIG. 2】

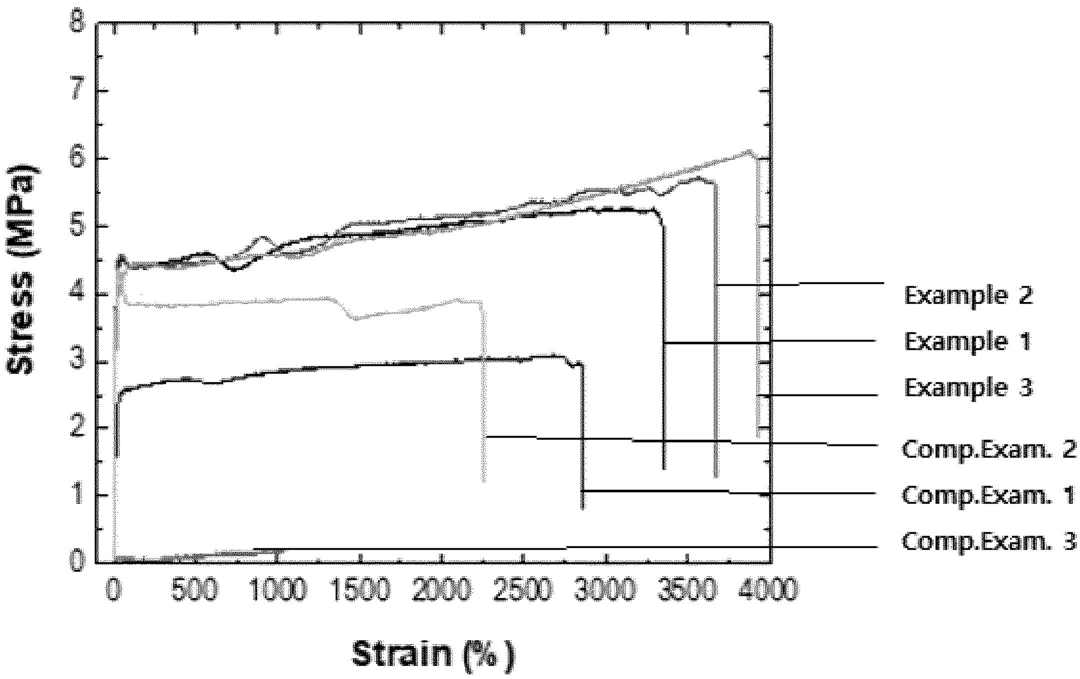
Example 2
Example 1
Example 3
Comp.Exam. 2
Comp.Exam. 1
Comp.Exam. 3
Stress (MPa)
0
1
2
3
4
5
6
7
8
0
500
1000
1500
2000
2500
3000
3500
4000
Strain (%)

**INTERNATIONAL SEARCH REPORT**

International application No.
**PCT/KR2023/013457**

**A. CLASSIFICATION OF SUBJECT MATTER**

**C08L 23/08**(2006.01)i; **C08J 5/18**(2006.01)i; **B29C 55/12**(2006.01)i; **C08F 210/16**(2006.01)i; **C08F 210/14**(2006.01)i

According to International Patent Classification (IPC) or to both national classification and IPC

**B. FIELDS SEARCHED**

Minimum documentation searched (classification system followed by classification symbols)

C08L 23/08(2006.01); B29C 55/12(2006.01); B32B 27/32(2006.01); C08F 2/38(2006.01); C08F 210/02(2006.01); C08F 4/646(2006.01); C08F 4/659(2006.01); C08J 5/18(2006.01); C08L 23/06(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 에틸렌-알파올레핀 공중합체(ethylene-α-olefin copolymer), 타이 분자(Tie molecule), 자연 연신 비율(Natural Draw Ratio, NDR), 밀도(density), 용융지수(melt index, MI), 이축 연신 필름(biaxially-oriented film)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2019-0139466 A (SABIC SK NEXLENE COMPANY PTE. LTD.) 18 December 2019 (2019-12-18)<br>See abstract; paragraphs [0008], [0100] and [0188]-[0192]; claims 1-8 and 11-21; example 1; and table 2. | 1-16 |
| Y | KR 10-2019-0110961 A (LG CHEM, LTD.) 01 October 2019 (2019-10-01)<br>See claims 1-7 and 11-15. | 1-16 |
| Y | KR 10-2071594 B1 (LG CHEM, LTD.) 03 February 2020 (2020-02-03)<br>See claims 1-6 and 9. | 1-16 |
| A | KR 10-2022-0075523 A (LOTTE CHEMICAL CORPORATION) 08 June 2022 (2022-06-08)<br>See entire document. | 1-16 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 December 2023** | **15 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
PCT/KR2023/013457

C. DOCUMENTS CONSIDERED TO BE RELEVANT

| Category* | Citation of document, with indication, where appropriate, of the relevant passages | Relevant to claim No. |
|---|---|---|
| A | JP 2005-089693 A (MITSUI CHEMICALS INC.) 07 April 2005 (2005-04-07)<br>See entire document. | 1-16 |
| A | JP 2000-038483 A (SUMITOMO CHEM. CO., LTD.) 08 February 2000 (2000-02-08)<br>See entire document. | 1-16 |

Form PCT/ISA/210 (second sheet) (July 2022)

**INTERNATIONAL SEARCH REPORT**
**Information on patent family members**

International application No.
**PCT/KR2023/013457**

| Patent document cited in search report | | | Publication date (day/month/year) | Patent family member(s) | | | Publication date (day/month/year) |
|---|---|---|---|---|---|---|---|
| KR | 10-2019-0139466 | A | 18 December 2019 | CN | 112218917 | A | 12 January 2021 |
| | | | | CN | 112218917 | B | 18 August 2023 |
| | | | | EP | 3802688 | A1 | 14 April 2021 |
| | | | | JP | 2021-524877 | A | 16 September 2021 |
| | | | | JP | 7039735 | B2 | 22 March 2022 |
| | | | | US | 11773196 | B2 | 03 October 2023 |
| | | | | US | 2021-0163642 | A1 | 03 June 2021 |
| | | | | WO | 2019-234637 | A1 | 12 December 2019 |
| KR | 10-2019-0110961 | A | 01 October 2019 | | None | | |
| KR | 10-2071594 | B1 | 03 February 2020 | CN | 113166320 | A | 23 July 2021 |
| | | | | CN | 113166320 | B | 28 February 2023 |
| | | | | EP | 3878875 | A1 | 15 September 2021 |
| | | | | JP | 2022-510678 | A | 27 January 2022 |
| | | | | JP | 7187098 | B2 | 12 December 2022 |
| | | | | US | 2022-0049033 | A1 | 17 February 2022 |
| | | | | WO | 2021-040139 | A1 | 04 March 2021 |
| KR | 10-2022-0075523 | A | 08 June 2022 | | None | | |
| JP | 2005-089693 | A | 07 April 2005 | | None | | |
| JP | 2000-038483 | A | 08 February 2000 | | None | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220120055
- KR 1020220144767
- US 10775287 B